Europäisches Patentamt

European Patent Office

Office européen des brevets

(19)

(11) **EP 1 642 693 A1**

(12) **EUROPEAN PATENT APPLICATION**
published in accordance with Art. 158(3) EPC

(43) Date of publication:
05.04.2006 Bulletin 2006/14

(51) Int Cl.:
**B25J 13/08** (1985.01)

(21) Application number: **04734754.7**

(22) Date of filing: **25.05.2004**

(86) International application number:
**PCT/JP2004/007457**

(87) International publication number:
**WO 2005/000537 (06.01.2005 Gazette 2005/01)**

(84) Designated Contracting States:
**DE GB**

(30) Priority: 25.06.2003 JP 2003180506
25.06.2003 JP 2003180507
10.07.2003 JP 2003195266
10.07.2003 JP 2003195267
08.01.2004 JP 2004002895
08.01.2004 JP 2004002896
08.01.2004 JP 2004002894

(71) Applicant: **HONDA MOTOR CO., Ltd.**
**Tokyo 107-8556 (JP)**

(72) Inventors:
• **KONDO, Toshiyuki,**
Honda Engineering Co., Ltd.
Sayama-shi, Saitama 350-1381 (JP)

• **NAKAJIMA, Ryo,**
Honda Engineering Co., Ltd.
Sayama-shi, Saitama 350-1381 (JP)
• **YOSHIDA, Shin,**
Honda Engineering Co., Ltd.
Sayama-shi, Saitama 350-1381 (JP)
• **OZAWA, Tetsuya,**
Honda Engineering Co., Ltd.
Sayama-shi, Saitama 350-1381 (JP)
• **SAKAI, Yoshiharu,**
Honda Engineering Co., Ltd.
Sayama-shi, Saitama 350-1381 (JP)

(74) Representative: **Rupp, Christian et al**
**Mitscherlich & Partner,**
**Patent- und Rechtsanwälte,**
**Postfach 33 06 09**
**80066 München (DE)**

(54) **ASSIST TRANSPORTATION METHOD AND DEVICE**

(57) To provide an assist transportation device capable of properly communicating a reaction force to a worker due to contact without damaging any product and obstacle even if the product contacts the obstacle under work. The assist transportation device for reducing a load applied to the worker when the worker operates transportation means to transport an instrument panel P includes instrument panel holding means 27 for holding the instrument panel P, floating mechanism 30 set to the connection portion between the instrument panel holding means 27 and the transportation means, displacement sensor 61 for detecting the displacement value of the floating mechanism 30, and position instruction computing portion 62 for computing the displacement value detected by the displacement sensor 61 to calculate a reaction force, in which the reaction force is transferred to the worker operating the transportation means.

Figure 1

EP 1 642 693 A1

## Description

Technical Field

The present invention relates to an assist transportation method and its device for decreasing the load to a worker when the worker operates transportation means to transport a product.

Background Art

Conventionally, known is a work assist to which impedance control is applied by which a worker canperform transportation work while the worker feels as if he/she transports a light weight object though a heavy one. The work assist is a power assist provided with first to eighth movable bodies for supporting a heavy object, actuators for moving the movable bodies, and a controller for controlling outputs of the actuators, detecting a force to be indirectly applied to the heavy object by a worker by a force sensor in order to transport the heavy obj ect fixed to the eighth movable body by worker's way, controlling the first to eighth movable bodies in accordance with the information, and reducing the load to the worker (for example, refer to Japanese Patent Laid-Open No. 2000-84881).

However in the case of the work assist disclosed in Japanese Patent Laid-Open No. 2000-84881, while a worker transports a heavy object or when the worker positions and sets the heavy object to a setting portion, even if the heavy object contacts with an obstacle, a reaction force generated in the heavy object due to the contact is not conducted to a worker operating the assist. Therefore, there is a problem that the worker cannot detect that the heavy object contacts with the obstacle and thereby continues transportation work, and the heavy object or the heavy-obj ect setting portion may be damaged.

The present invention is made to solve the above problem of a conventional technique and its object is to provide an assist transportation method and a device capable of properly communicating a reaction force due to contact to a worker without damaging a product and an obstacle even if the product contacts with an obstacle at the time of work.

Disclosure of the Invention

To solve the above problem, the invention of claim 1 is an assist transportation method for reducing a load applied to a worker when the worker operates transportation means to transport a product, in which when the product contacts with an obstacle, the product is floated from the transportation means to moderate the impact, the displacement value of the product due to floating is detected, the displacement value is processed to compute a reaction force due to the impact, and the reaction force is communicated to the worker.

According to the invention, when the product contacts with the obstacle, the impact is moderated by setting a floating mechanism between the transportation means and the product and the displacement value of the floating mechanism is processed to compute an impact force, and the reaction force by the impact force is communicated to the worker through the transportation means. Therefore, when the worker transports the product or sets the product to a component to be set, the worker can efficiently perform work while the worker feels that the worker contacts with any obstacle or component to be set without damaging a product or the component to be set even if the product contacts with any obstacle or component to be set.

The invention of claim 2 is an assist transportation device for reducing a load applied to a worker when the worker operates transportation means to transport a product, which includes holding means for holding a product, a floating mechanism set to the connection portion between the holding means and the transportation means, displacement detection means for detecting the displacement value of the floating mechanism, and control means for processing the displacement value detected by the displacement detection means and computing a reaction force, and communicates the reaction force to the worker operating the transportation means.

According to the invention, because the floating mechanism set between the holding means for holding a product and the transportation means, displacement detection means for detecting the displacement value of the floating mechanism, and control means for processing the displacement value detected by the displacement detection means and computing a reaction force are included, even if the product contacts with any obstacle or component to be set when the worker transports the product or sets the product to the component to be set, the product or the component to be set cannot be damaged. Moreover, the worker can efficiently perform work while feeling that the worker contacts with the obstacle or component to be set.

The invention of claim 3 is an assist transportation method for reducing a load applied to a worker when the worker operates transportation means to transport a product, in which a work area through which a product can freely move is set and a limit area formed adjacently to the work area for generating a predetermined reaction force so as to return a product to the work area when the product comes in is set.

According to the invention, because the work area through which a product can freely move is set and the limit area for generating a predetermined reaction force so as to return the product to the work area when the product comes in is set, the worker can efficiently perform the transportation work without being aware of an obstacle or without applying an impact to the product.

The invention of claim 4 is an assist transportation device for reducing a load applied to a worker when the worker operates transportation means to transport a product, which includes a work area through which the product can freely move, a limit area formed adjacently to the work area to generate a predetermined reaction force so as to return the product to the work area when the product comes in, and control means for processing the incoming value of the product incoming to the limit area to compute the reaction force.

According to the invention, because the word area through which the product can freelymove, limit area formed adjacently to the work area to generate a predetermined reaction force so as to return the product to the work area when the product comes in, and control means for processing the incoming value of the product entering the limit area to compute the reaction force are included, the worker can efficiently perform transportation work without being aware of an obstacle or without applying an impact to the product.

The invention of claim 5 is an assist transportation method for reducing a load applied to a worker when the worker operates transportation means to transport a product, in which the product is floated from the transportation means, the displacement value of the product due to floating is detected when the worker holds the product and operates it in a direction for transporting the product, the displacement value is processed, and the product is assist-transported as a target value of the transportation means.

The invention of claim 6 is an assist transportation device for reducing a load applied to a worker when the worker operates transportation means to transport a product, which includes holding means for holding the product, operation handle set to the holding means for the worker to lead the product in a desired direction, floating mechanism set to the connection portion between the holding means and the transportation means, displacement detection means for detecting the displacement value of the floating mechanism, and control means for processing the displacement value detectedby the displacement detection means to assist-transport the product as a target value of the transportation means.

According to inventions of claims 5 and 6, it is possible to efficiently reduce a load applied to a worker while keeping a state having preferable operability without directly feeling driving of transportation means. Moreover, when a worker transports a product or sets the product to a component to be set, a load applied to the worker is reduced and even if the product contacts with any obstacle or component to be set, the product or component to be set is not damaged. Moreover, the worker can efficiently perform work while feeling that the product contacts with any obstacle or component to be set.

The invention of claim 7 is an assist transportation method for reducing a load applied to a worker who operates an operation handle set to transportation means to transport a product, in which the direction and magnitude of an operation force applied to the operation handle when the worker operates the product in a direction for transporting the product are detected, the direction and magnitude of an external force when the product contacts with an obstacle, directions and magnitudes of the operation force and the external force are processed to assist-transport the product as a target value of the transportation means, and the reaction force by the external force is communicated to the worker.

The invention of claim 8 is an assist transportation device for reducing a load applied to a worker for operating an operation handle set to transportation means to transport a product, in which holding means for holding the product, operation force detection means for detecting the direction and magnitude of an operation force applied to the operation handle set to the connection portion between the holding means and the transportation means, external force detection means set to the connection portion between the holding means and the transportation means to detect the direction and the magnitude of an external force applied to the holding means, and control means for processing the direction and magnitude of the operation force detected by the operation force detectionmeans and the direction and magnitude of the external force detected by the external force detection means and assist-transporting the product as a target value of the transportation means are included and the reaction force by the external force is communicated to the worker.

According to inventions of claims 7 and 8, it is possible to efficiently reduce a load applied to a worker while keeping a state of preferable operability without directly feeling driving of transportation means. Moreover, when a worker transports a product or sets the product to a component to be set, a load applied to the worker is reduced and the product or component to be set is not damaged even if the product contacts with any obstacle or component to be set. Furthermore, the worker can efficiently perform work while feeling that the product contacts with any obstacle or component to be set.

The invention of claim 9 is an assist transportation method for reducing a load applied to a worker for operating transportation means to transport a product, in which the direction and magnitude of an operation force when the worker holds the product and moves the transportation means in a direction for transporting the product are detected and the direction and magnitude of the operation force is processed to assist-transport the product as a target value of the transportation means.

The invention of claim 10 is an assist transportation device for reducing a load applied to worker for operating transportation means to transport a product, which includes holding means for holding the product, an operation handle set to the holding means to lead the product in a direction desired by the worker, external force detection means set to the connection portion between the holding means and the transportation means to detect the direction and magnitude of an external force applied to the holding means, and control means for processing the direction and magnitude of the external force detected by the external force detection means to assist-transport the product as a target value of the transportation means.

According to inventions of claims 9 and 10, it is possible to efficiently reduce a load applied to a worker while keeping a state of preferable operability without directly feeling driving of the transportation means. Moreover, when a worker transports a product or sets the product to a component to be set, a load applied to the worker is reduced and even if the product contacts with any obstacle or component to be set, the product or component to be set is not damaged. Furthermore, the worker can efficiently perform work while feeling that the product contacts with any obstacle or component to be set.

The invention of claim 11 is an assist transportation method for reducing a load applied to a worker when the worker operates transportation means to transport a product, which comprises a condition setting step of setting a transportation area and assist condition every predetermined position of a transportation route and a transportation area setting step of setting a transportation area between adjacent predetermined positions and an assist condition through operations in accordance with the transportation area and the assist condition every predetermined position set in the condition setting step to set the transportation area of components.

According to the invention, because a transportation area and an assist condition every predetermined position of a transportation route and a transportation area and an assist condition are automatically set over the whole transportation route connecting predetermined positions, it is possible to easily set the transportation area. Therefore, it is possible to efficiently correspond to change of assist conditions due to change of transportation routes and change of transportation components.

The invention of claim 12 is an assist transportation method for reducing a load applied to a worker when the worker operates transportation means to transport a product, which comprises a transportation area confirmation step of confirming a transportation route and a transportation area in accordance with position data for a plurality of teaching points and transportation area data set every teaching point, a transportation-portion position confirmation step of obtaining the position of a transportation portion for supporting a product, and a transportation-portion-position moving step of obtaining a transportation route closest to the position of the transportation portion and moving the transportation portion to the predetermined position of the obtained transportation route or into transportation area of the obtained transportation route when the position of the transportation portion is out of the transportation area, wherein the transportation portion is returned into the transportation area when the position of the transportation portion for supporting a product is out of the transportation area.

According to the invention, when a transportation portion is out of a transportation area, it is possible to automatically move the position of the transportation portion onto the nearest transportation route or into the transportation area of the nearest transportation route.

Brief Description of the Drawings

Figure 1 is a schematic illustration of an instrument-panel setting station to which a first embodiment using an assist transportation method and its device of the present invention is applied;
Figures 2(a) and 2(b) are schematic diagrams of a floating mechanism, in which Figure 2(a) is a perspective view of the floating mechanism and Figure 2(b) is a schematic view showing the inside of the floating mechanism;
Figure 3 is a block diagram of a control system for power assist control in the first embodiment using the assist transportation method and its device of the present invention;
Figure 4 is a conceptual illustration of a reaction-power detection control in the first embodiment;
Figures 5 to 7 are illustrations of a work area setting method;
Figure 8 is a schematic illustration of an instrument-panel setting station to which a second embodiment of an assist transportation method and its device of the present invention is applied;
Figure 9 is a block diagram of a control system for power assist control in the second embodiment of the assist transportation method and its device of the present invention;
Figure 10 is a conceptual illustration of an assist transportation control in the second embodiment;
Figure 11 is a general schematic diagram of a vehicle-door assembly line to which an assist transportation method and its device of the present invention are applied;
Figure 12 is a perspective view of transportation means;
Figure 13 is a top view of the machine pedestal of transportation means;
Figure 14 is a perspective view of the connection portion between transportation means and holding means;

Figure 15 is an illustration of holding means;

Figure 16 is a block diagram of a control system for power assist control of a third embodiment of an assist transportation method and its device of the present invention;

Figure 17 is a conceptual illustration of an assist transportation control in the third embodiment;

Figure 18 is an illustration of a door viewed from an inner panel side;

Figures 19(a) and 19(b) are illustrations of a door-glass elevating regulator, in which Figure 19(a) is a back view of the regulator and Figure 19(b) is an illustration viewed from the surface side;

Figures 20(a) and 20(b) are illustrations of a state of setting a door-glass elevating regulator in a door innerpanel, in which Figure 20(a) is a state diagram when inserting a door-glass elevating regulator into the opening of an inner panel and Figure 20(b) is state diagram when the door-glass elevating regulator is rotated and fixed to the inner panel after inserting the regulator;

Figure 21 is a perspective view of the connection portion between transportation means and holding means;

Figure 22 is a block diagram of a control system for power assist control in a fourth embodiment of an assist transportation method and its device of the present invention;

Figure 23 is a conceptual illustration of assist transportation control in the fourth embodiment;

Figure 24 is a block diagram of a fifth embodiment of an assist transportation method and its device of the present invention;

Figure 25 is an illustration showing a teaching job program;

Figure 26 is an illustration showing an assist parameter table;

Figure 27 is an illustration showing an assist area setting method;

Figure 28 is an illustration showing the switching characteristic of assist impedance;

Figures 29(a) and 29(b) are illustrations of the relating processing between the present position and an assist area;

Figure 30 is an illustration (1) of computationprocessing of assist area and assist impedance when the assist area and assist impedance are changed between teaching points;

Figure 31 is an illustration (2) of computation processing of assist area and assist impedance when the assist area and assist impedance are changed between teaching points; and

Figure 32 is an illustration of computation of the returning force of an invisible wall and switching processing of assist impedance.

Best Mode for Carrying Out the Invention

Embodiments of the present invention are described below by referring to the accompanying drawings.

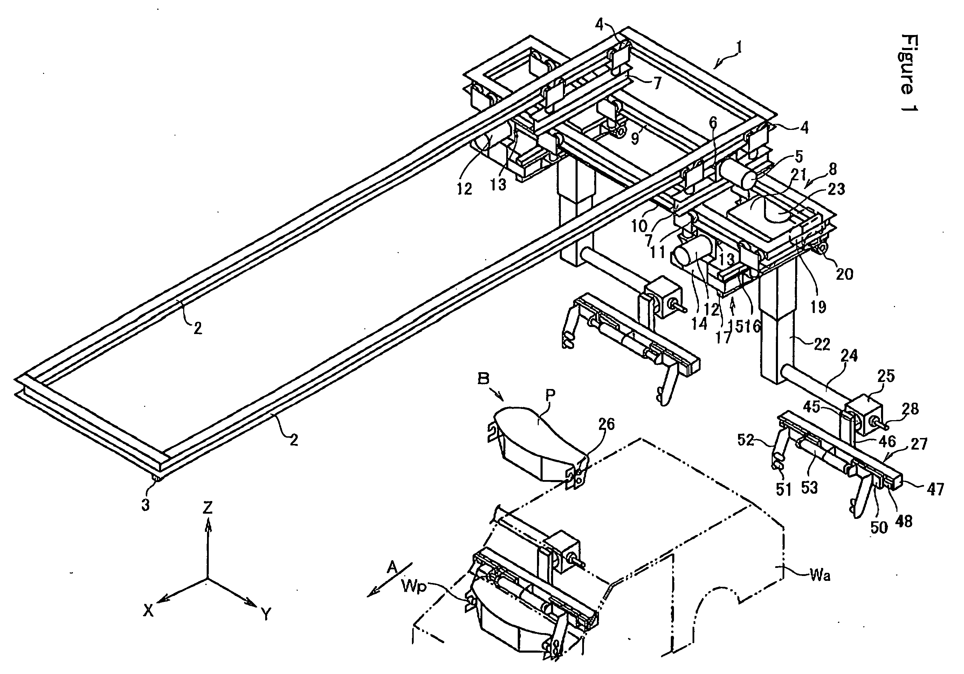

At the instrument panel setting station of a vehicle assembly line, vehicle bodies Wa positioned to a mounting jig set on a slat conveyer are continuously transported at equal speed in the direction of the arrow A as shown in Figure 1 .

A first embodiment using an assist transportation method and its device of the present invention is constituted as describedbelow. In Figure 1, an assist transportation device shows two states, that is, a position (original position) for horizontally (Y direction) holding an instrument panel P of the vehicle body Wa and a position of setting the instrument panel P to the vehicle body Wa.

A first frame body 1 is set above the vehicle assembly line in parallel with (X direction) the vehicle assembly line. Two slide rails 2 and one rack 3 are set to the first frame body 1 in parallel with the vehicle assembly line. A plurality of rollers 4 are rotatably engaged with the two slide rails 2 and a pinion gear 6 set to a motor 5 is engaged with the rack 3. The rollers 4 and motor 5 are set to a support member 7. The motor 5 is a motor for synchronizing the assist transportation device with the vehicle body Wa.

Moreover, a second frame body 8 is connected to the rollers 4 and the support member 7 of the motor 5. Two slide rails 9 and one rack 10 are set to the second frame body 8 orthogonally to the vehicle assembly line. A plurality of rollers 11 are rotatably engaged with the two slide rails 9 and a pinion gear 13 set to a motor 12 is engaged with the rack 10. The rollers 11 and motor 12 are set to a support member 14. The motor 12 is a motor for power-assist-driving the assist transportation device in Y-axis direction.

Moreover, a third frame body 15 is connected to the rollers 11 and the support member 14 of the motor 12. Two slide rails 16 and one rack 17 are set to the third frame body 15 in parallel with the vehicle assembly line. A plurality of slide guides are slidably engaged with the two slide rails 16 and a pinion gear 20 set to the motor 19 is engaged with the rack 17. The slide guides and motor 19 are set to lower-face marginal portion of a table 21. The motor 19 is amotor for power-assist-driving the assist transportation device in X-axis direction.

Furthermore, a telescopit-type slide guide 22 is set to the lower-face center of the table 21, a feed screw (not illustrated) is set in the slide guide 22, and a motor 23 is connected to the feed screw. The motor 23 is vertically set to the table 21. The motor 23 is a motor for power-assist-driving the assist transportation device vertically (Z direction).

A cylindrical arm 24 is extended to the side facing the vehicle body Wa nearby the lower end of the slide guide 22 and a box 25 housing a floating mechanism is set to the front end of the arm 24. Instrument panel holding means 27 for holding the instrument panel P is set to the face of the box 25 facing the traveling direction of the vehicle body Wa through the floating mechanism and an operation handle 28 is set to the face of the box 25 facing the vehicle body Wa.

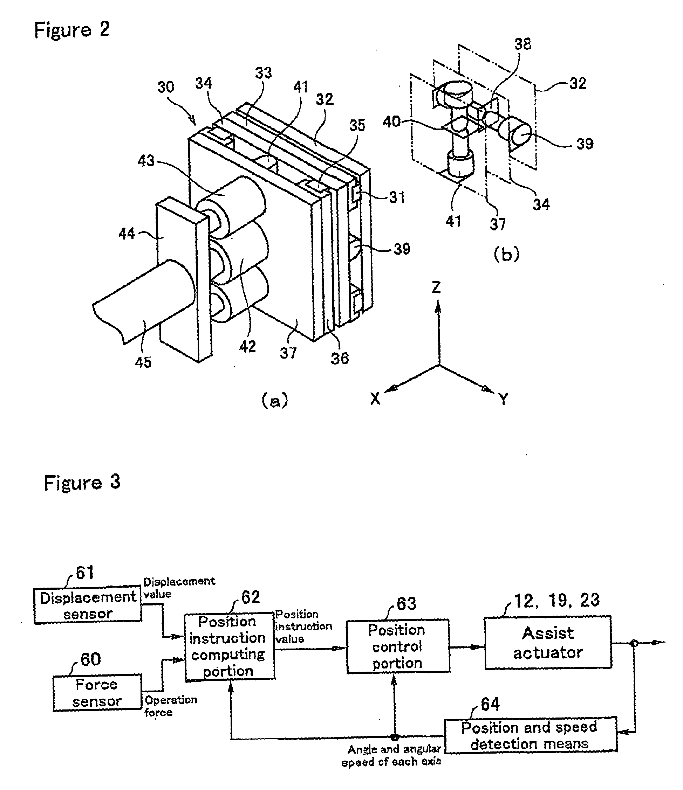

As shown in Figure 2, a floating mechanism 30 is provided with a fixed table 32 in which a pair of slide rails 31 are set horizontally (Y direction) to the front end of the vehicle bodyWa, a first slide table 34 in which a slide guide 33 slidably engaged with the slide rails 31 is set to the rear face, and a second slide table 37 in which a slide guide 36 slidably engaged with a pair of slide rails 35 vertically (Z direction) set to the vehicle body Wa at the front end of the first slide table 34 is set to the rear face.

A centering member 38 to be held is set to the front center of the fixed table 32 and a pair of centering cylinders 39 in which the front end of a piston rod are faced to the horizontal direction (Y direction) of the vehicle body Wa in a state capable of holding the centering member 38 to be held is set to the rear face of the first slide table 34. A displacement sensor is built in the centering cylinder 39 and thereby it is possible to always confirm a displacement value in the horizontal direction (Y direction) of the vehicle body Wa of the first slide table 34.

Moreover, a centering member 40 to be held is set to the front center of the first slide table 34 and a pair of centering cylinders 41 in which the front end of a piston rod is faced in the vertical direction (Z direction) of the vehicle body Wa in a sate capable of holding the centering member 40 to be held are set to the rear face of the second slide table 37. A displacement sensor is built in the centering cylinder 41 and thereby it is possible to always confirm a displacement value in the vertical direction (Z direction) of the vehicle body Wa of the second slide table 37.

Moreover, a cylinder 42 directing the front end of a piston rod in the traveling direction of the vehicle body Wa is set to the front of the second slide table 37 and a pair of slide guides 43 are set in parallel with the cylinder 42. A rectangular parallelepiped block 44 is fixed to the front end of the piston rod of the cylinder 42 and the front end of the slide guide 43 and an arm 45 for connecting the instrument panel holding means 27 is set to the front of the block 44. A displacement sensor is built in the cylinder 42 and thereby it is possible to always confirm a displacement value in the cross-direction (X direction) of the vehicle body Wa of the block 44.

As shown in Figure 1, the instrument panel holding means 27 is constituted of a base pedestal 47 set to the front end of the arm 45 through a connection member 46 by directing the longitudinal direction to the horizontal direction (Y direction) of the vehicle body Wa, a pair of slide rails 48 set to both ends of the front of the base pedestal 47 in the horizontal direction (Y direction) of the vehicle body Wa, a pair of slide tables 50 set to a slide guide 49 slidably engaged with the slide rails 48, a pair of support arms 52 having a plurality of connection pins 51 set to the slide tables 50, and a pair of cylinders 53 for sliding the support arms 52 toward the reference hole 26 of the instrument panel P.

Moreover, load cells (force sensors) for detecting forces in orthogonal three-axis directions are built in the setting portion of the operation handle 28 of the box 25 supporting the instrument panel holding means 27 to always detect forces applied to the horizontal direction (Y direction) of the vehicle body Wa, cross direction (X direction) of the vehicle body Wa, and vertical direction (Z direction) of the vehicle body Wa. Forces detected by these force sensors are used for power-assist control of this device.

Displacement values detected by displacement sensors built in the cylinders 39, 41, and 42 of the floating mechanism 30 are used to generate a reaction force when the instrument panel P held by the instrument panel holding means 27 contacts with the vehicle body Wa or an obstacle.

As shown in Figure 3, a control system for power assist control in the first embodiment using an assist transportation method and its device is constituted of a force sensor 60 for detecting forces in orthogonal three-axis directions set to the setting portion of the operation handle 28, displacement sensor 61 for detecting displacement values in orthogonal three axis directions set to the floating mechanism 30, position instruction computing portion 62, position control portion 63, motor (for Y axis) 12, motor (for X axis) 19, and motor (for Z axis) 23 serving as assist driving actuators, and position and speed detection means 64 for detecting positions and speeds of the motors 12, 19, and 23.

The information on forces applied to the horizontal direction (Y direction) of the vehicle body Wa, cross direction (X direction) of the vehicle body Wa, and vertical direction (Z direction) of the vehicle body Wa detected by the force sensor 60 are input to the position instruction computing portion 62. The position instruction computing portion 62 computes assist-driving data F for the motor (for Y axis) 12, motor (for X axis) 19, and motor (for Z axis) 23 to perform assist driving in accordance with the force information and inputs the data F to the position control portion 63.

The position control portion 63 performs control so that the motor (for Y axis) 12, motor (for X axis) 19, and motor (for Z axis) 23 perform assist driving in accordance with the assist driving data F. In this case, positions and speeds of the motor (for Y axis) 12, motor (for X axis) 19, and motor (for Z axis) 23 are detectedby the position and speed detection means 64 and fed back to the position instruction computing portion 62 and position control portion 63.

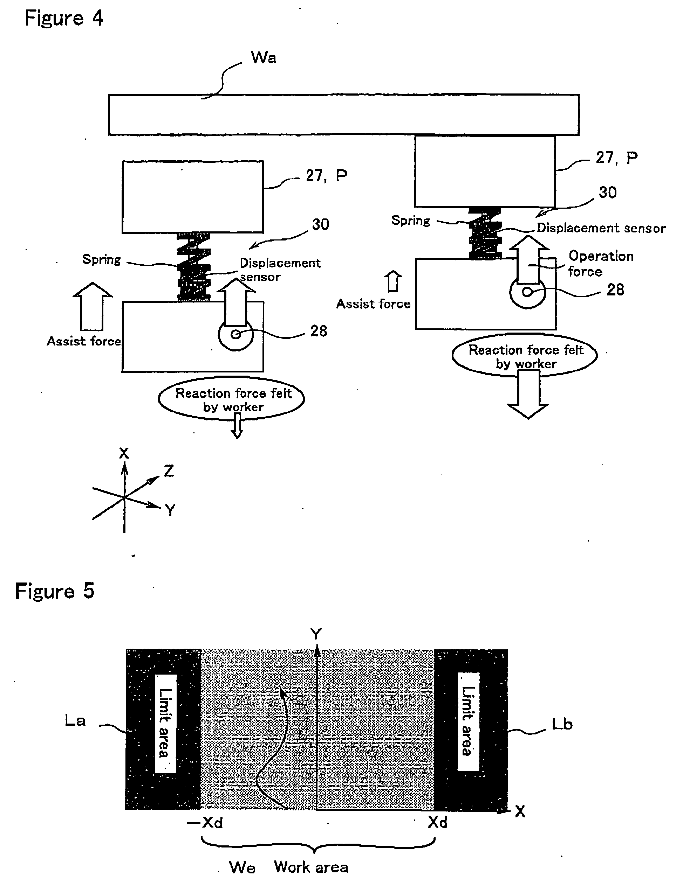

Moreover, as shown in Figure 4, when the instrument panel P held by the instrument panel holding means 27 contacts with the vehicle body Wa or an obstacle, at least one of three displacement sensors 61 set to the floating mechanism 30 detects a displacement value x and the displacement value x is input to the position instruction computing portion 62. Figure 4 shows one axis (X axis) and it is assumed that the X-axis cylinder 42 of the floating mechanism 30 for connecting the instrument panel holding means 27 with the arm 24 of the assist transportation device has the same characteristic as a spring.

The position instruction computing portion 62 computes reaction-force generation data f in accordance with the information on the displacement value x. In this case, by assuming f = K.x, it is possible to create rigidity feeling as a spring constant in which K can be set to an optional value. Therefore, as the displacement value x increases, a worker feels a larger reaction force. It is possible to use not only the displacement value x but also the speed and acceleration to compute a reaction force.

Moreover, the position instruction computing portion 62 subtracts the reaction force generation data f from the assist driving data F for the motor (for Y axis) 12, motor (for X axis) 19, and motor (for Z axis) 23 to perform assist driving and inputs the instruction value of the position computed by using the subtraction result (F-f) to the position control portion 63.

The position control portion 63 performs control so that the motor (for Y axis) 12, motor (for X axis) 19, and motor (for Z axis) 23 perform assist driving while generating reaction forces with the subtraction result (F-f). In this case, positions and speeds of the motor (for Y axis) 12, motor (for X axis) 19, and motor (for 2 axis) 23 are detected by the position and speed detection means 64 and fed back to the position instruction computing portion 62 and the position control portion 63.

Moreover, in the case of an assist transportation method and its device of the present invention, by making it possible for the assist to freely move through a space in an operation range when operating the assist, it interferes with the vehicle body Wa or the like. Therefore, as shown in Figure 5, by setting not a mechanical limiter having impact feeling but a limiter for controlling a movable range in software so as to hold a work area We in the operation range in the cross direction (X direction) of the vehicle body Wa, it is possible to form limit areas La and Lb in an area exceeding the limiter. Moreover, it is possible to form a limit area so as to hold the work area We in the operation range in the horizontal direction (Y direction) of the vehicle body Wa and the vertical direction (Z direction) of the vehicle body Wa.

In the work area We, power assist driving according to normal impedance control is performed and in the limit areas La and Lb, it is changed to impedance control using a control expression including the expression of rigidity characteristic (f = Kd· (x-xd), x>xd or x<-xd) is started. In this case, f denotes a force so that the instrument panel P returns to the work area We from the limit areas La and Lb, Kd denotes a spring constant which can be set to an optional value, x denotes the coordinate value at an end of a workpiece (instrument panel P), xd denotes a coordinate value of the vehicle body Wa with which an end of the workpiece (instrument panel P) may contact, and (x-xd) denotes an entry value (entry distance from work area We) to the limit areas La and Lb of the workpiece (instrument panel P).

Moreover, because the spring constant Kd can be set to an optional value by software, it is possible to change the value by limit areas, for example, by the limit areas La and Lb or change the value in accordance with the distance from the work area We in the limit areas La and Lb.

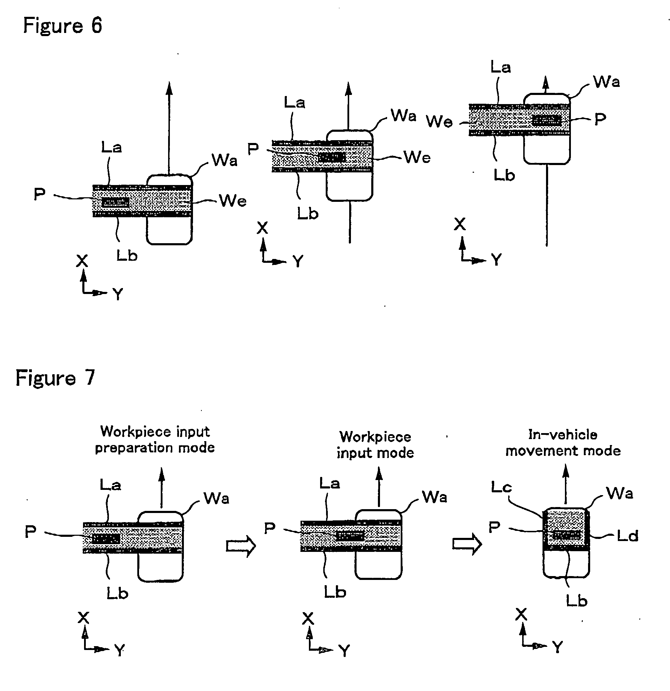

Furthermore, as shown in Figure 6, when putting the workpiece (instrument panel P) into the vehicle body Wa from a front-door opening by synchronizing the workpiece with vehicle body Wa transported by a slat conveyer and setting the workpiece to a predetermined position, it is possible to set the workpiece so that the work area We and limit areas La and Lb move synchronously with the vehicle body Wa. In this case it is also possible to set the work area We and limit areas La and Lb in accordance with a coordinate system at the vehicle body Wa side.

Moreover, as shown in Figure 7, in one cycle until the workpiece (instrument panel P) is set to the vehicle body Wa after being held, it is possible to change limit areas in accordance with an operation mode (workpiece setting preparationmode, workpiece settingmode, orin-vehiclemoving mode) .

For example, it is possible to set the limit areas La and Lb to both ends of the operation range in the cross direction (X direction) of the vehicle body Wa orthogonal to the traveling direction (Y direction) of the workpiece in the work setting preparation mode and work setting mode. Moreover, in the vehicle moving mode, it is possible to set limit areas Lc and Ld to both ends of the operation range in the horizontal direction (Y direction) of the vehicle body Wa in which the workpiece may contact with the vehicle body Wa and the limit area Lb to either end of the operation range in the cross direction (X direction) of the vehicle body Wa. Therefore, it is possible to move the workpiece (instrument panel P) along the limit areas La, Lb, Lc, and Ld.

Operations of the assist transportation device and the assist transportation method of the first embodiment constituted as described above are described below. To hold the instrument panel P transported to the instrument panel supply position B shown in Figure 1, a worker operates the operation handle 28 of the assist transportationdevice stopped at the original position, opens a pair of support arms 52, and moves the instrument panel holding means 27 up to the instrument panel supply position B in which the instrument panel is mounted on a carriage (not illustrated).

Then, by facing the connection pin 51 to the reference hole 26 of the instrument panel P and then driving the cylinder 53, and inserting the connection pin 51 into the reference hole 26, the instrument panel holding means 27 holds the instrument panel P. Moreover, when raising the instrument panel P from the carriage and operating the operation handle 28 in a direction for moving the instrument panel P, the motor (for Y axis) 12, motor (for X axis) 19, and motor (for Z axis) 23 perform assist driving for reducing a load of a worker.

Then, by operating the operation handle 28 so that the instrument panel P moves synchronously with the vehicle body Wa, the instrument panel P is further transported into the vehicle body Wa from the front-door opening of the vehicle body Wa to move the panel P nearby the instrument-panel-setting positioning pin Wp set to the vehicle body Wa. In this case, the instrument-panel-setting positioning pin Wp may contact with a bracket on which a pin-inserting guide hole is formed or an end of the instrument panel P may contact with the vehicle body Wa at a high probability.

When the instrument panel P contacts with the vehicle body Wa, a cylinder located in the direction in which the instrument panel P is returned among the cylinders 39, 41, and 42 set to the floating mechanism 30 is contracted and a displacement sensor built in the cylinder detects the displacement value. The motor (for Y axis) 12, motor (for X axis) 19, and motor (for Z axis) 23 are controlled so that a worker for operating the assist transportation device feels a reaction force due to contact between the instrument panel P and the vehicle body Wa.

According to the above assist control, the worker detects that the instrument panel P approaches its setting position and transports the instrument panel P to a position nearby the setting portion of the vehicle body Wa and then can perform the setting work by manually delicately adjusting the position of the instrument panel P. The range of position adjustment in this case can be absorbed by the floating mechanism 30. Therefore, no impact is added to this device.

When the above setting work is completed and the worker brings the instrument panel holding means 27 to the outside' of the vehicle body Wa, the worker operates the operation switch for work completion. Then, the assist transportation device automatically returns to the original position without contacting with the vehicle body Wa or facilities around a line.

Moreover, the work area We of the instrument panel holding means 27 is previously set by setting the limit areas La and Lb. Therefore, the worker does not make the instrument panel P contact with the vehicle body Wa or facilities around the line while transporting the instrument panel P.

Moreover, even if the worker operates the operating handle 28 so as to move the instrument panel holding means 27 from the work area We to the limit areas La and Lb, motors 12, 19, and 23 serving as power-assist driving actuators is controlled so that an impact does not occur and a reaction force for returning the instrument panel holding means 27 to the work area We occurs. Therefore, no impact is applied to this device or instrument panel P. Therefore, the worker can perform work without being aware of boundaries between the work area We and the limit areas La and Lb.

Then, second embodiment of an assist transportation method and its device of the present invention has a configuration same as the above-described first embodiment except that a pair of operation handles 28a and 28b are set to the instrument panel holding means 27 and a control system is used.

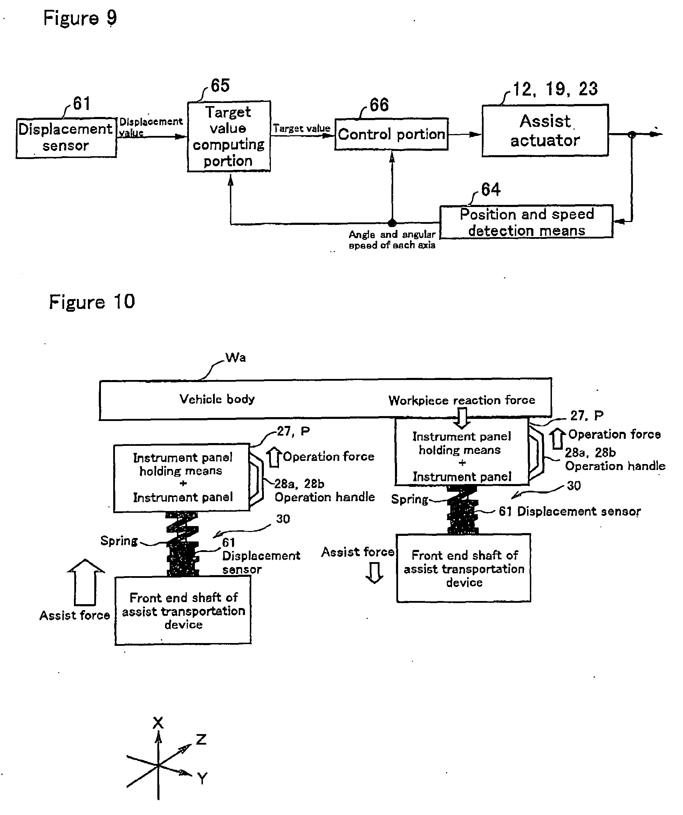

As shown in Figure 9, a control system for power assist control in the second embodiment is constituted of displacement sensors 61 for detecting displacement values in orthogonal three-axis directions set to the floating mechanism 30, target value computing portion 65, control portion 66, motor (for Y axis) 12, motor (for X axis) 19, motor (for Z axis) 23 serving as assist driving actuators, and position and speed detection means 64 for detecting positions and speeds of the motors 12, 19 and 23.

As shown in Figure 10, when a worker grips operation handles 28a and 28b and leads the instrument panel P held by the instrument panel holing means 27 in a desired direction, at least one of three displacement sensors 61 set to the floating mechanism 30 detects a displacement value and the displacement value is input to the target value computing portion 65.

Moreover, when the instrument panel P held by the instrument panel holding means 27 contacts with the vehicle body Wa or an obstacle, at least one of three displacement sensors 61 set to the floating mechanism 30 detects a displacement value and the displacement value is input to the target value computing portion 65. Figure 10 shows one axis (X axis) and it is assumed that the X-axis cylinder 42 of the floating mechanism 30 for connecting the instrument panel holding means 27 with the arm 24 of the assist transportation device has the same characteristic as a spring.

The target value computing portion 65 computes target values (target trajectory, speed, and assist force) of an assist transportation device in accordance with displacement values of the displacement sensors 61. For example, when it is assumed that x is a displacement value of the displacement sensor 61, pd is a target trajectory, Kd is a desired spring coefficient, Dd is a desired viscous friction coefficient, and Md is a desired mass, the following expression (1) is effected.

$$d^2Pd/dt^2 = (Kdx+Dddx/dt)/Md \quad ..... \quad (1)$$

For simplification, the expression is shown by only one axis (X axis). Actually, there are three axes (X, Y, and Z) .

Moreover, the target value computing portion 65 computes target values (target trajectory, speed, and assist force) in accordance with the expression (1) for the motor (for Y axis) 12, motor (for X axis) 19, and motor (for Z axis) 23 to drive an assist in accordance with the expression (1) and inputs the target values to the control portion 66.

The control portion 66 controls the motor (for Y axis) 12, motor (for X axis) 19, and motor (for Z axis) 23 so as to follow computing results (trajectory: pd, speed: dpd/dt, and acceleration: $d^2pd/dt^2$) by the target value computing portion 65. In this case, positions and speeds of the motor (for Y axis) 12, motor (for X axis) 19, and motor (for Z axis) 23 are detected by the position and speed detection means 64 and fed back to the target value computing portion 65 and control portion 66.

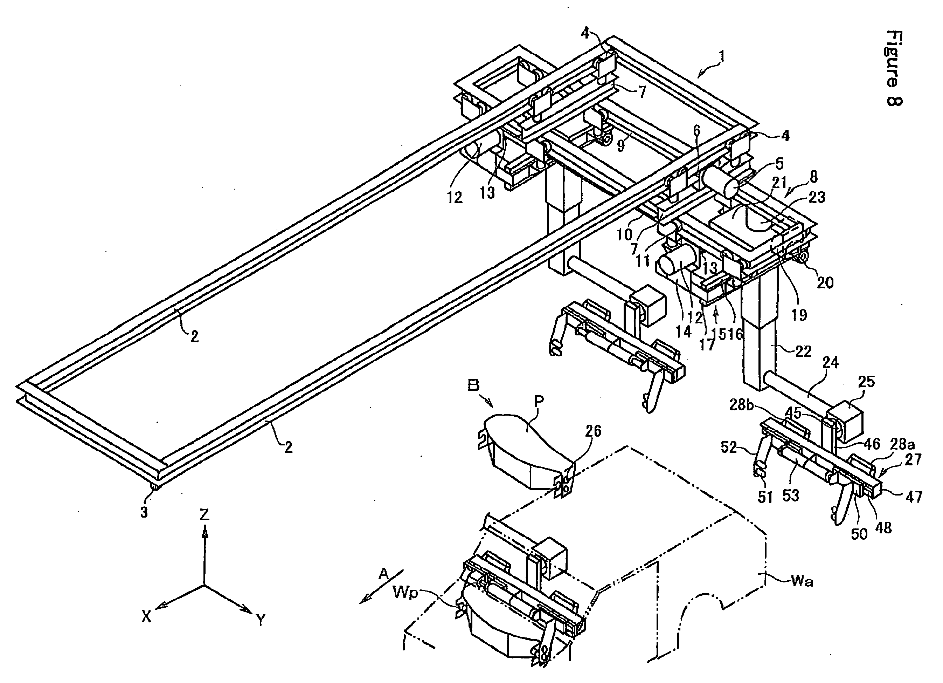

Operations of the assist transportation device of the second embodiment constituted as described above and an assist transportation method are described below. To hold the instrument panel P transported to the instrument panel supply position B shown in Figure 8, a worker operates the operation handles 28a and 28b of the assist transportation device stopped at the original position, opens a pair of support arms 52, and mounts the instrument panel P on a carriage (not illustrated), and moves the instrument panel holding means 27 up to the instrument panel supply position B in which the instrument panel is mounted on a carriage (not illustrated) .

Then, by directing the connection pin 51 to the reference hole 26 of the instrument panel P and then, driving the cylinder 53, and inserting the connection pin 51 into the reference hole 26, the instrument panel holding means 27 holds the instrument panel P. Moreover, when the work raises the instrument panel P from the carriage and operates the operation handles 28a and 28b in a direction for moving the instrument panel P, the motor (for Y axis) 12, motor (for X axis) 19, and motor (for Z axis) 23 perform assist driving for reducing a load applied to the worker.

Then, the operation handles 28a and 28b are operated so that the instrument panel P moves synchronously with the vehicle body Wa and moreover, the instrument panel P is transported into the vehicle body Wa from the front-door opening portion of the vehicle body Wa and moved up to the vicinity of the instrument-panel-setting positioning pin Wp set to the vehicle body Wa. In this case, the instrument-panel-setting positioning pin Wp may contact with a bracket on which a pin inserting guide hole of the instrument panel P is formed or an end of the instrument panel P may contact with the vehicle body Wa at a high probability.

When the instrument panel P contacts with the vehicle body Wa, a cylinder located in the direction in which the instrument panel P is returned among the cylinders 39, 41, and 42 set to the floating mechanism 30 contracts and the displacement sensor 61 built in the cylinder detects the displacement value. The motor (for Y axis) 12, motor (for X axis) 19, and motor (for Z axis) 23 are controlled so that a worker operating the assist transportation device feels a reaction force due to contact between the instrument panel P and the vehicle body Wa in accordance with a displacement value detected by the displacement sensor 61.

In accordance with the assist control, the worker feels that the instrument panel P approaches its setting position and transports the instrument panel P up to the vicinity of the setting portion of the vehicle body Wa and then, can perform the setting operation by manually performing delicate position adjustment. Because the range for position adjustment can be absorbed by the floating mechanism 30, no impact is applied to this device.

When the above setting work is completed and the worker brings the instrument panel holding means 27 to the outside of the vehicle body Wa, the worker operates an operation switch for work end. Then, the assist transportation device automatically returns to the original position without contacting with the vehicle body Wa or circumferential facilities.

Then, a third embodiment of an assist transportation method and its device of the present invention is applied to the door-glass elevating-regulator setting step portion of a vehicle door assembly line so that a door-glass elevating regulator can be efficiently set to a vehicle door to be pitch-fed.

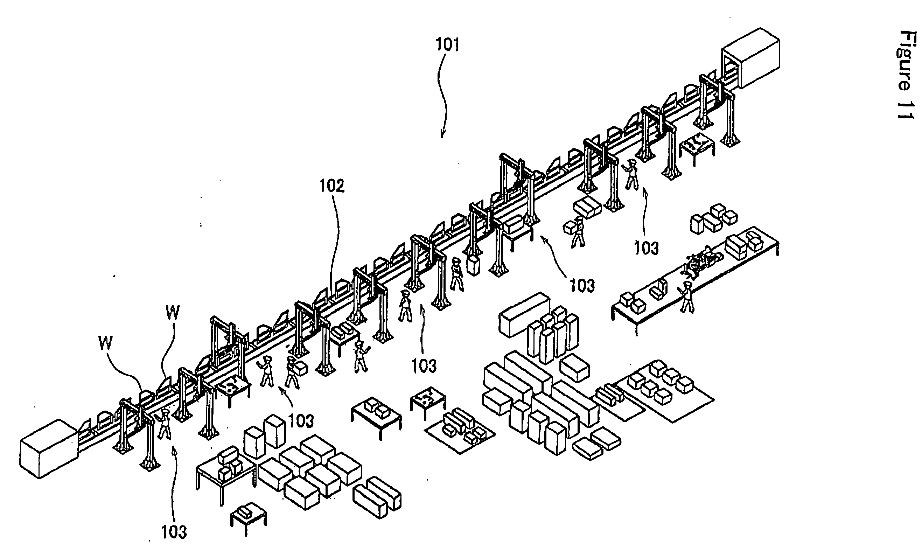

That is, as shown in Figure 11, the vehicle door assembly line 101 includes a door transportation line 102 for pitch-feeding a vehicle door W and a plurality of setting step portions 103 to be sequentially arranged from the upstream side to the downstream side of the door transportation line 102 and each setting component is set to the door W by the setting step portions 103.

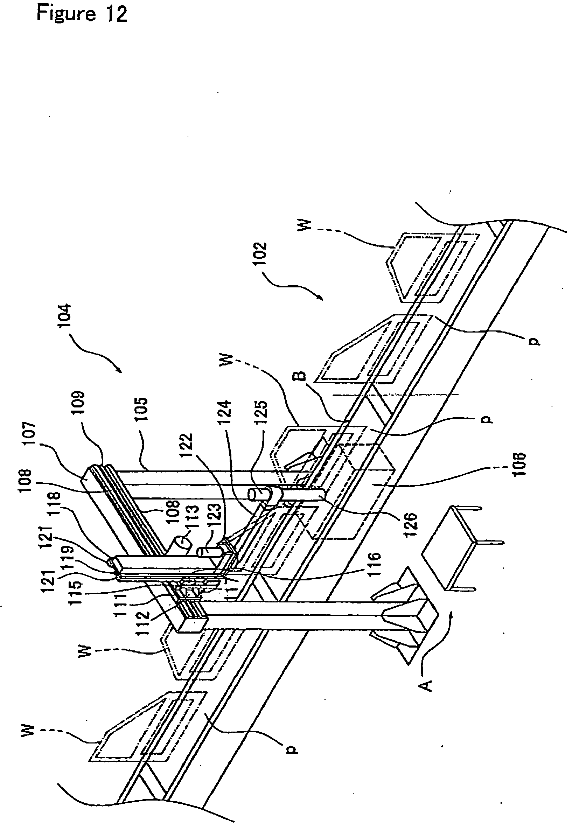

Moreover, some of the setting step portions 103 are used as step portions for setting a door-glass elevating regulator R and the transportation means 104 shown in Figure 12 is set to the step portion for setting the door-glass elevating regulator R.

In the door transportation line 102, a pair of right and left doors W of the same vehicle is pitch-transported and the sets are aligned and vertically mounted on one rectangular pallet p (Figure 12) while directing inner panel-Wi sides in the same direction. A plurality of pallets p are proximity-arranged along the line and at the same time the pallets p are transported by a constant stroke and stopped for a certain period and the above operations are repeated.

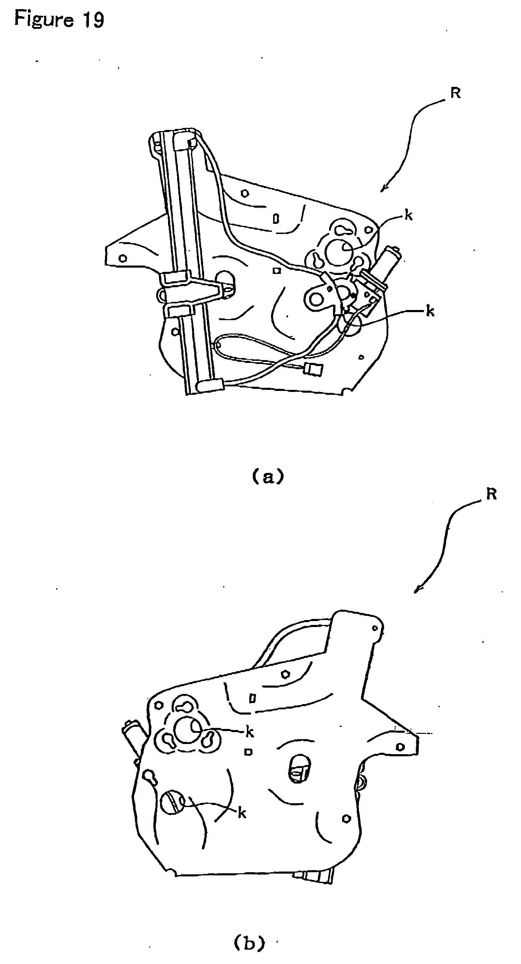

As shown in Figure 12, the transportation means 104 includes a portal machine pedestal 105 set so as to straddle the door transportation line 102 and holding means 106 capable of moving in the multispindle direction from the machine pedestal 105 and the holding means 106 is constituted as a setting apparatus for setting the door-glass-elevating regulator R (Figure 19) so that it can be moved between a component supply position A set nearby the machine pedestal 105 and a setting position B of the stopped door W.

First, relevant equipment is described. A pair of upper and lower slide rails 108 is set to either side of an upper beam 107 of the machine pedestal 105 and a rack 109 is set between the slide rails 108.

Then, a slide table 112 is slidably engaged with the slide rails 108 through a slide guide 111, a first motor (for X axis) 113 is set to the slide table 112 as an actuator and a pinion gear to be driven by the first motor 113 is protruded to the back of the slide table 112 and engaged with the rack 109. Therefore, the slide table 112 can horizontally move by the operation of the first motor 113.

Moreover, a support table 115 is set to the surface of the slide table 112 through a setting pedestal, a pair of slide guides 116 is set to the surface of the support table 115, a second motor 117 (for Z axis) is set to the back of the support table 115 as one of actuators, the rotating shaft of the second motor 117 protrudes to the surface side of the support table 115, and a pinion gear (not illustrated) is set to the front end of the rotating shaft. Furthermore, the pinion gear gears with a rack 119 of an elevating table 118 to be described below.

The elevating table 118 includes a pair of slide rails 121 to be slidably engaged with the slide guide 116 of the support table 115 and the rack 119 set between the slide rails 121 so that it can be vertically moved in accordance with the operation of the second motor 117.

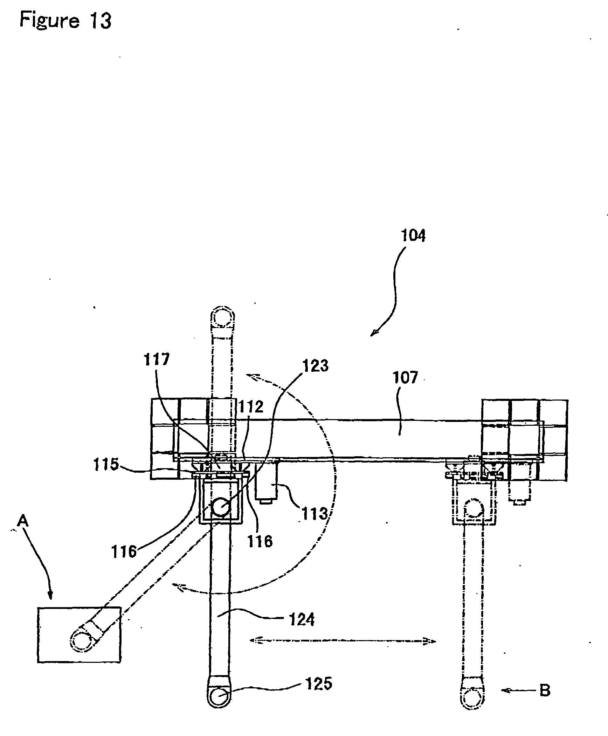

A support pedestal 122 protruding forward is set to the lower end of the elevating table 118 and a third motor 123 (for horizontal-rotational S shaft) as a part of an actuator. Moreover, the output shaft of the third motor 123 is connected to the proximal end of a horizontal arm 124 horizontally protruded from the lower portion of the support pedestal 122 via the gear and the horizontal arm 124 can be rotated about the vertical shaft at the proximal end side by the driving of the third motor 123 as shown in Figure 13.

By driving the first to third motors (X axis, Z axis, andXaxis) 113, 117, and 123, it is possible to change positions of a product (door-glass-elevating regulator R) in a three-dimensional space.

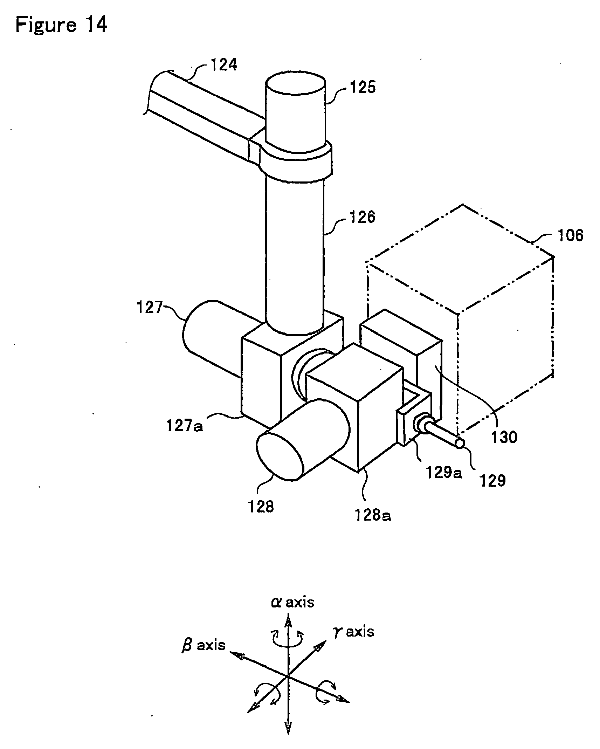

Moreover, as shown in Figure 14, fourth to sixth motors (for rotation) 125, 127, and 128 are set as some of actuators whose output shafts are orthogonal to each other. That is, the fourth motor (for rotational $\alpha$ axis) 125 is vertically set to the upper face at the front end of the horizontal arm 124, a vertical arm 126 is connected to the output shaft of the fourth motor 125, the fifth motor (for rotational $\beta$ axis) 127 is set to the lower end of the vertical arm 126 through a bracket 127a, the sixth motor (for rotational $\gamma$ axis) is set to the output shaft of the fifth motor 127 through a bracket 128a, and the holding means 106 is set to the output shaft of the sixth motor 128 through the setting portion 129a of an operation handle 129 and a box 130.

By driving the fourth to sixth motors ($\alpha$ axis, $\beta$ axis, andyaxis) 125, 127, and 128, it is possible to change attitudes of the product (door-glass-elevating regulator R) in a three dimensional space.

Moreover, six-axis force/torque sensors for operation inputs for detecting the direction and magnitude of an operation force generatedwhen a worker operates the operation handle 129 are set to the setting portion 129a of the operation handle 129 and six-axis interference detection force/torque sensors for detecting the direction and magnitude of an external force when the product (door-glass-elevating regulator R) contact with an obstacle is set to the box 130. Forces detected by these force/torque sensors are used for power assist control of this device.

Actuators of the first to sixth motors (X axis, Z axis, S axis, $\alpha$ axis, $\beta$ axis, and $\gamma$ axis) 113, 117, 123, 125, 127, and 128 realize switching control of an automatic transportation mode which does not require a worker and an assist transportation mode capable of reducing a load applied to a worker though requiring the worker. Moreover, when a mode change switch is changed to the automatic transportation mode, the holding means 106 automatically moves through a previously taught route. When the automatic transportation mode is changed to the assist transportation mode, a load applied to the worker is reduced when the worker indirectly moves the holding means 106 by the operation handle 129.

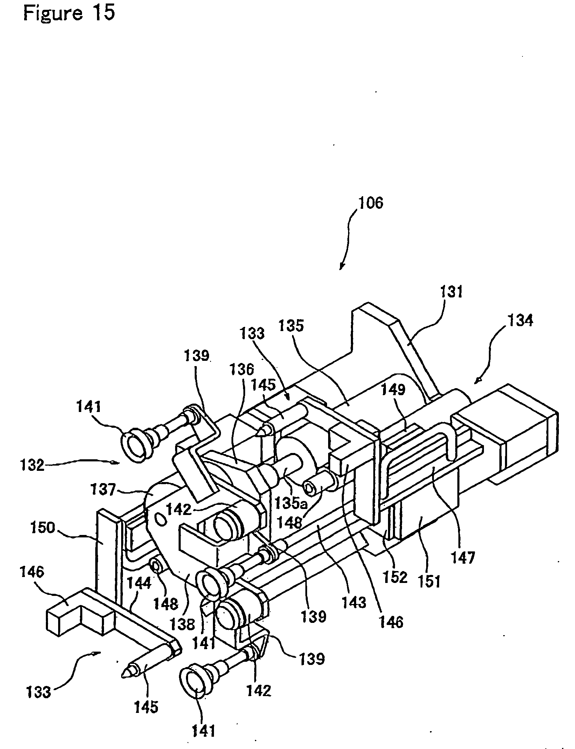

Then, the holding means 106 is described below. As shown in Figure 15, the holding means 106 has a machine pedestal table 131 connected to the output shaft of the sixth motor 128 through the box 130 and settingportion 129a of the operation handle 129 and the machine pedestal table 131 has a holding mechanism portion 132 for holding the door-glass-elevating regulator R, a positioning mechanism portion 133 for positioning the door-glass-elevating regulator R to a predetermined position of the door W, anda fasteningmechanism portion 134 for setting the door-glass-elevating regulator R to the door W.

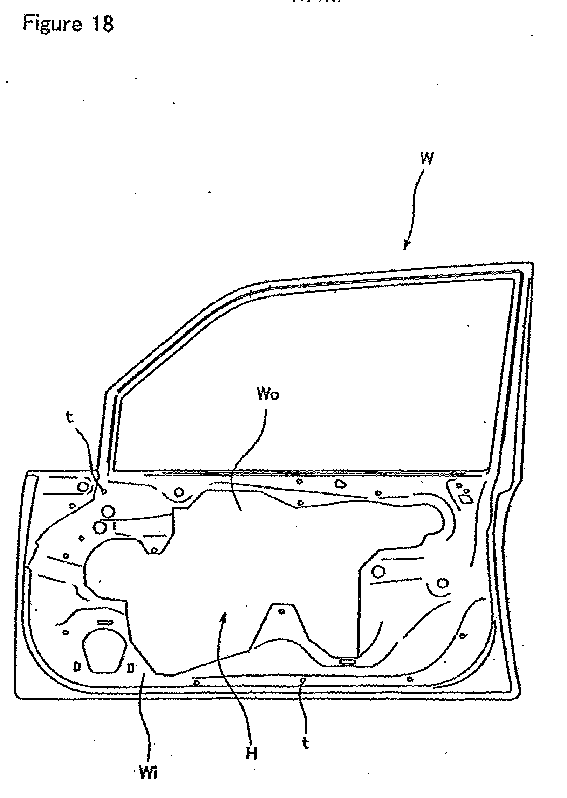

Moreover, the door-glass-elevating regulator R is inserted into the space portion between an inner panel Wi and an outer panel Wo through an opening portion H of the inner panel Wi of the door W shown in Figure 18, positioned by the positioningmechanismportion 133, and then fastened and fixed with bolts by the fastening mechanism portion 134.

The holding mechanism portion 132 includes a first cylinder 135 set to the front of the machine pedestal table 131, substrate 136 connected to the front end of a cylinder rod 135a of the first cylinder 135, motor 137 set to the front of the substrate 136, and table 138 set to the front of the rotating shaft of the motor 137. A plurality of attraction pads 141 and a bossed positioning pin 142 are set to the table 138 via each bracket 139 and the bossed positioning pin 142 can be inserted into the reference hole k (Figure 19 (b)) of the door-glass-elevating regulator R.

Moreover, a slide rail (not illustrated) is set to the side of the substrate 136 and slidably fitted to the slide guide 143 extended from the front of the machine pedestal table 131. Therefore, the substrate 136 can be slid vertically to the machine pedestal table-131 face by the operation of the first cylinder 135 and the table 138 can be rotated by a predetermined angle by the operation of the motor 137.

Furthermore, by attracting the attraction pads 141 to the surface (face in Figure 19(b)) of the plate portion of the door-glass-elevating regulator R while inserting the bossed positioning pin 142 into the reference hole k of the door-glass-elevating regulator R, the door-glass-elevating regulator R can be held and the door-glass-elevating regulator R is tilted to an attitude not interfering with the margin of the opening H of the inner panel Wi and inserted by the motor 37 and then the attitude of the door-glass-elevating regulator R can be converted into a setting attitude.

In the case of the positioning mechanism portion 133, a support member 144 is set to the front end of a support rod 147 extended from the machine pedestal table 131 through a bracket 150 andabossedpin 145 tobe inserted into the reference hole of the inner panel and an inner panel contact member 146 made of resin or rubber contacting with a predeterminedportion of the inner panel are set to the support member 144 . Moreover, a pair of positioning mechanism portions 133 is used while holding the holding mechanism portion 132.

Moreover, by inserting the bossed pin 145 of the positioning mechanism portion 133 into the reference hole t (Figure 18) of the inner panel and bringing the inner-panel contact member 146 into contact with the inner panel Wi at a predetermined position, the door W and holding means 106 are aligned.

The fastening mechanism portion 134 includes a nut runner 148 slidably engaged with a slide rail (not illustrated) formed on the side of the support rod 147 fixed to the machine pedestal table-131 side through a slide guide and a second cylinder 151 for advancing or retreating the nut runner 148 to or from the inner panel Wi-side . The second cylinder 151 is connected to a slide-guide-provided table 149 integrated with the nut runner-148 side through a connection member 152.

Moreover, the nut runner 148 is advanced or retreated to or from the inner panel Wi in accordance with the telescopic motion of the second cylinder 151. A pair of nut runners 148 isused. Moreover, when positioning the door-glass-elevating regulator R to the setting attitude, the nut runner 148 advances and the fixing operation is performed through bolt fastening.

When a worker pushes the operation handle 129 in a direction for moving the handle 129 while gripping a deadman switch, the automatic transportation mode is changed to the assist transportation mode so that the handle 129 can be transported by a small force. When the worker releases his hand from the deadman switch, the assist transportation mode is changed to the automatic transportation mode.

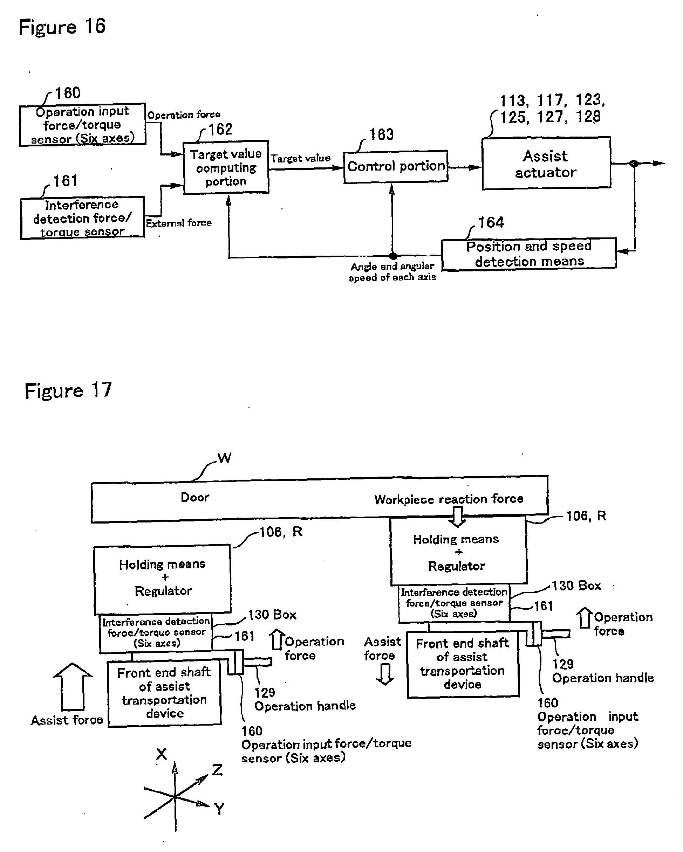

As shown in Figure 16, a control system for power assist control in the third embodiment is constituted of six-axis operation-input force/torque sensors 160 set to the setting portion of the operation handle 128 to detect the direction and magnitude of an operation force by a worker applied to the operation handle, six-axis interference detection force/torque sensors 161 set to the box 130 to detect the direction and magnitude of an external force when the product (door-glass-elevating regulator R) contact with an obstacle, target value computing portion 162, control portion 163, position control motors (X axis, Z axis, and S axis) 113, 117, and 123 serving as assist driving actuators, attitude control motors ($\alpha$ axis, $\beta$ axis, and $\gamma$ axis) 125, 127, and 128, and position and speed detection means 164 for detecting positions and speeds of the motors 113, 117, 123, 125, 127, and 128.

As shown in Figure 17, when a worker grips the operation handle 129 and leads the door-glass-elevating regulator Rheld by the holding means 106 in a desired direction, at least one axis of six-axis operation input force/torque sensors 160 set to the setting portion 129a of the operation handle 129 detects an operation force and the operation force is input to the target value computing portion 162.

Moreover, even if the door-glass-elevating regulator R held by the holding means 106 contacts with the door W or an obstacle, at least one axis of the six-axis interference detection force/torque sensors 161 detects an external force and the external force is input to the target value computing portion 162. Figure 17 shows one axis (X axis).

The target value computing portion 162 computes target values (target trajectory, speed, and assist force) of the assist transportation device in accordance with operation forces (direction and magnitude) detected by the operation input force/torque sensors 160 and external forces (direction and magnitude) detected by the interference detection force/torque sensors 161.

For example, when assuming that X-directional forces detected by the interference detection force/torque sensor 161 is $F_x$, moments around X axis detected by the interference detection force/torque sensors 161 is Nx, X-directional forces detected by the operation input force/torque sensors 160 is $f_x$, moments around X axis detected by the operation input force/torque sensors 160 is $n_x$, X-directional target trajectory is x, target trajectory of rotation around X axis is $\theta$, desirable mass is M, desirable moment of inertia as I, desirable X-directional viscous friction coefficient is $D_{xd}$, and desirable viscous friction coefficient around X axis is $D_{\theta d}$, the following expressions (2) and (3) are effected.

$$d^2x/dt^2 = (f_x - F_x - D_{xd} \cdot dx/dt)/M \ \ldots\ldots \ (2)$$

$$d^2\theta/dt^2 = (n_x - N_x - D_{\theta d} \cdot d\dot{\theta}/dt)/I \ \ldots\ldots \ (3)$$

The expressions are shown only by one axis direction (X axis direction) for simplification. In fact, expressions (2) and (3) are effected for six axes (X axis, Z axis, S axis, $\alpha$ axis, $\beta$ axis, and $\gamma$ axis) .

Moreover, the target value computing portion 162 computes target values (target trajectory, speed, and assist force) for the position control motors (X axis, Z axis, and S axis) 113, 117, and 123 and attitude control motors ($\alpha$ axis,

β axis, and γ axis) 125, 127, and 128 to perform assist driving in accordance with the expressions (2) and (3) and inputs the target values to the control portion 163.

The control portion 163 controls the position control motors (X axis, Z axis, and S axis) 113, 117, and 123 and the attitude control motors (α axis, β axis, and γ axis) 125, 127, and 128 so as to follow computing results (traj ectory: x, speed: dx/dt, and acceleration: $d^2x/dt^2$) by the target value computing portion 162. Inthiscase, positions and speeds of the position control motors (X axis, Z axis, and S axis) 113, 117, and 123 and the attitude control motors (α axis, β axis, and γ axis) 125, 127, and 128 are detected by the position and speed detection means 164 and fed back to the target value computing portion 162 and control portion 163.

Operations of the assist transportation device and the assist transportation method of the third embodiment constituted as described above are described below.

When a pair of right and left doors W are pitch-fed along the door transportation line 102, the door-glass-elevating regulator R is automatically transported to the setting position B by the transportation means 104. That is, when the holding means 106 holds the door-glass-elevating regulator R at the component supply position A, the regulator R is automatically transported toward a predetermined point nearby the setting position B in accordance with a route set in the automatic transportation mode. In this case, it is allowed to hold the door-glass-elevating regulator R in the automatic mode or assist mode.

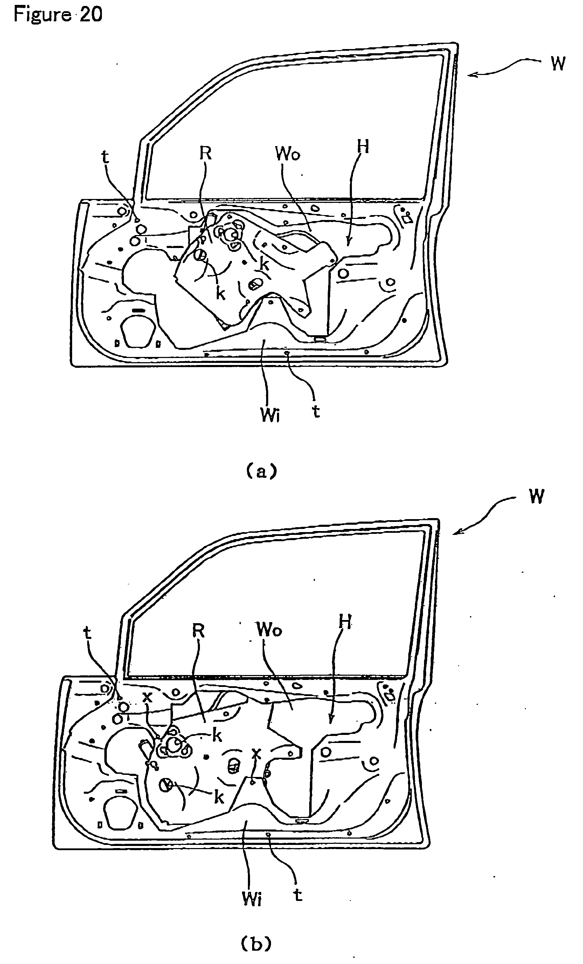

When the regulator R reaches the predetermined point nearby the setting position B, the mode of each actuator is changed to the assist transportation mode. Therefore, when the worker pushes the operation handle 129 in a direction for moving the handle 129 while gripping the deadman switch of the holding means 106, the holding means 106 is moved up to the setting position B. Moreover, when the worker passes through the opening H of the inner panel Wi of the door W, the door-glass-elevating regulator R is inserted by tilting its attitude so that the regulator R does not interfere with the margin of the opening H by operating another switch as shown in Figure 20(a).

Furthermore, after the worker passes through the above opening H, the bossed pin 145 of the positioning mechanism portion 133 is inserted into the reference hole t of the inner panel Wi until the bossed portion contacts with the surface and at the same time, positioning is performed by bringing the inner panel contact member 146 into contact with the surface of the inner panel Wi. Thereafter, by returning the tilt of the door-glass-elevating regulator R and slightly moving it to the inner panel-Wi side, the door-glass-elevating regulator R contacts with the inner panel Wi.

Then, the nut runner 148 provided with a bolt advances to the inner panel-W1 side, the bolt is passed through the bolt hole x of the inner panel Wi and fastened and fixed to a nut to be set to the door-glass-elevating regulator R. Thereby, the nut runner 148 can be set in the state shown in Figure 20 (b) .

When the setting work to either of the right and left doors W is completed, the worker releases his hand from the deadman switch. Then, the operationmode of the holding means 106 is changed to the automatic mode and the holding means 106 automatically moves to the component supply position A by following a decided route. Then, the holding means 106 holds the next door-glass-elevating regulator R and automatically transports it up to a portion nearby the setting position B in accordance with the same procedure.

Moreover, when the holding means 106 comes up to a predetermined point by transporting the regulator R, the present mode is changed to the assist transportation mode in accordance with the procedure same as the above described and the regulator R is set to the other door W in accordance with the same procedure. Then, transportation of the door transportation line 102 is stopped until setting of the regulator R to two doors W is completed. When setting to two doors W is completed, the next pallet p (door W) comes through pitch transportation.

According to the above procedure, by using the holding means 106 and thereby setting the door-glass-elevating regulator R to the doors W, it is possible to very efficiently perform work and moreover, because the inner panel Wi and outer panel Wo are previously integrated, the versatility of setting of other door setting components is not impaired.

When work is performed in the automatic transportation mode and any trouble occurs, by changing an operation switch to the assist mode, it is possible to perform transportation between all points in the assist mode. In this case, impedance setting when returning the component transportation means 104 to a point or area decided in the automatic transportation mode is automatically performed.

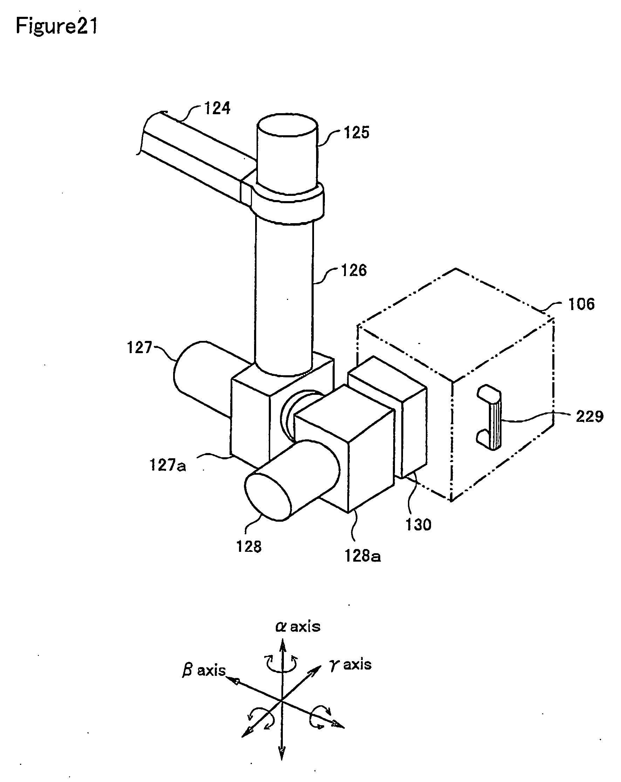

Then, as shown in Figure 21, fourth embodiment using an assist transportation method and its device of the present invention has the same configuration as the third embodiment except that an operation handle 229 is set to the holding means 106 set to the output shaft of the sixth motor 128 through the box 130 and a control system is used.

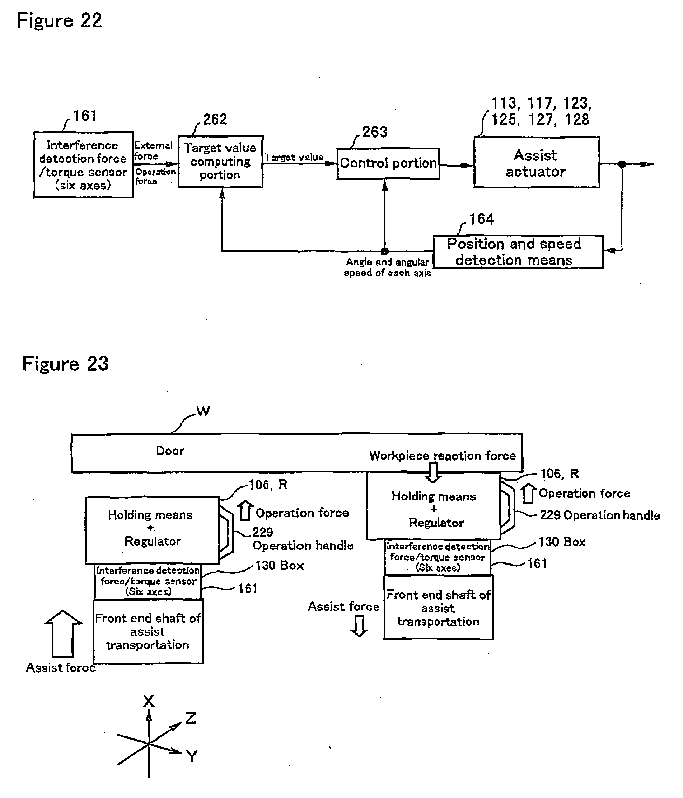

As shown in Figure 22, the control system for power assist control of the fourth embodiment is constituted of six-axis interference detection force/torque sensors 161 set to the box 130 to detect the direction and magnitude of an external force when the product (door-glass-elevating regulator R) contacts with an obstacle, target value computing portion 2 62, control portion 263, position control motors (X axis, Z axis, andS axis) 113, 117, and123 servingas assistdrivingactuators, attitude control motors (α axis, β axis, and γ axis) 125, 127, and 128, and position and speed detection means 164 for detecting positions and speeds of the motors 113, 117, 123, 125, 127, and 128.

As shown in Figure 23, when a worker grips the operation handle 229 and leads the door-glass-elevating regulator R held by the holding means 106 in a desired direction, at least one axis of the six-axis interference detection force/torque sensors 161 set to the box 130 detects an operation force and the operation force is input to the target value computing portion 262.

Moreover, when the door-glass-elevating regulator R held by the holding means 106 contacts with the door W or an obstacle, at least one axis of the six-axis interference detection force/torque sensors 161 set to the box 130 detects an external force and the external force is input to the target value computing portion 262. Figure 23 shows one axis (X axis).

The target value computing portion 262 computes target values (target trajectory, speed, and assist force) of the assist transportation device in accordance with operation forces and external forces detected by the interference detection force/torque sensors 161. For example, when assuming that the X-directional force detected by the interference detection force/torque sensor 161 is $F_x$, the moment around X axis detected by the interference detection force/torque sensor 161 is $N_x$, X-directional target trajectory is x, target trajectory of rotation around X axis is $\theta$, desirable mass is M, desirable moment of inertia is I, desirable X-directional viscous friction coefficient is $D_{xd}$, and desirable viscous friction coefficient around X axis is $D_{\theta d}$, the following expressions (4) and (5) are effected.

$$d^2x/dt^2 = (-F_x - D_{xd} \cdot dx/dt)M \quad \ldots \ldots \quad (4)$$

$$d^2\theta/dt^2 = (-N_x - D_{\theta d} \cdot d\theta/dt)/I \quad \ldots \ldots \quad (5)$$

The expression is shown by only axis direction (X axis direction) for simplification. In fact, the expressions (4) and (5) are effected for six axes (X axis, Z axis, S axis, $\alpha$ axis, $\beta$ axis, and $\gamma$ axis) .

Moreover, the target value computing portion 262 computes target values (target trajectory, speed, and assist force) for the position control motors (X axis, Z axis, and S axis) 113, 117, and 123 and attitude control motors ($\alpha$ axis, $\beta$ axis, and $\gamma$ axis) 125, 127, and 128 to perform assist driving in accordance with the expressions (4) and (5) and inputs the values to the control portion 263.

The control portion 263 controls the position control motors (X axis, Z axis, and S axis) 113, 117, and 123 and attitude control motors ($\alpha$ axis, $\beta$ axis, and $\gamma$ axis) 125, 127, and 128 so as to follow the computing results (trajectory: x, speed: ds/dt, and acceleration: $d^2x/dt^2$) by the target value computing portion 262. In this case, positions and speeds of the position control motors (X axis, Z axis, and S axis) 113, 117, and 123 and attitude control motors ($\alpha$ axis, $\beta$ axis, and $\gamma$ axis) 125, 127, and 128 are detected by the position and speed detection means 164 and fed back to the target value computing portion 262 and control portion 263.

Then, the fifth embodiment using an assist transportation method and its device of the present invention is applied to the door-glass-elevating-regulator setting step portion of the vehicle door assembly line 101 shown in Figure 11. The vehicle door assembly line 101 includes a door transportation line 102 for pitch-feeding the vehicle door W and a plurality of setting step portions 103 to be sequentially arranged from the upstream side to the downstream side of the door transportation line 102 and each setting component is set to the door W by these setting step portions 103.

Moreover, some of the setting step portions 103 are used as a step of setting the door-glass-elevating regulator R and the component transportation apparatus (transportation means) 104 shown in Figure 12 is set. The component transportation apparatus 104 can transport and set the door-glass-elevating regulator R which is a component.

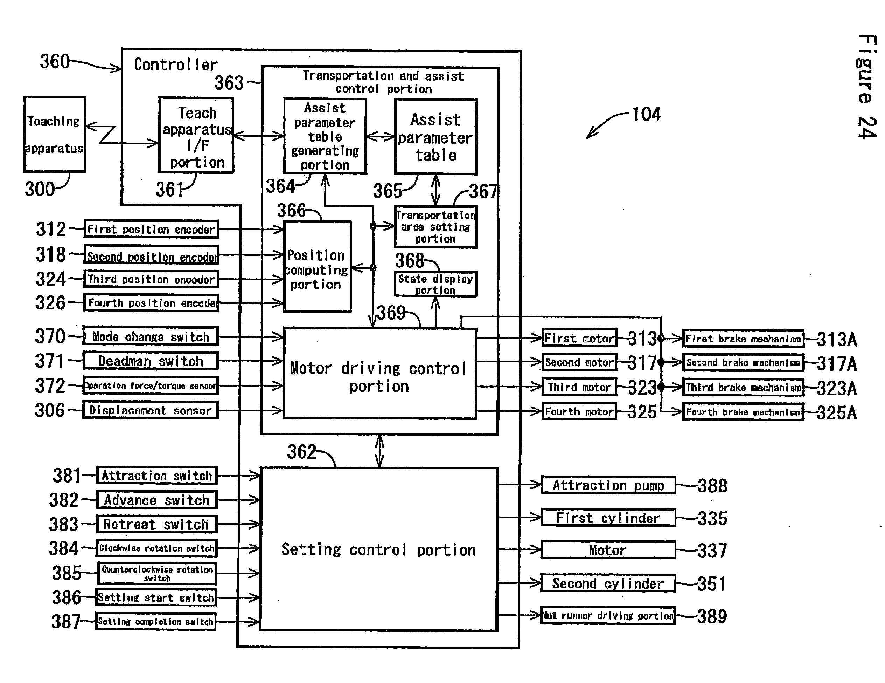

As shown in Figure 24, a controller 360 is constituted of a teaching apparatus I/F (interface) portion 361, setting control portion 362, and transportation and assist control portion 363. The controller 360 is constituted by using a microcomputer system.

The transportation and assist control portion 363 includes an assist parameter table generating portion 364, assist parameter table 365, position computing portion 366, transportation area setting portion 367, state display portion 368, and motor driving control portion 369.

The assist parameter generating portion 364 generates the assist parameter table 365 in accordance with various commands and data supplied from the teaching apparatus 300 through the teaching-apparatus I/Fportion361. When a remote control mode is set by the teaching apparatus 300, various commands output from the teaching apparatus 300 are supplied to the motor driving control portion 369 through the teaching-apparatus I/F portion 361 and assist-parameter-table generating portion 364. Thereby, by individually driving motors 313, 317, 323, and 325 by the teaching apparatus 300, it is possible to move the holding means 106 to a desired position.

The position computing portion 366 computes the present position of the holding means 106 in accordance with the position data (including angle data) detected by a first position encoder 312 for detecting the position of the slide table 112, second position encoder 318 for detecting the position of the support table 115, third position encoder 324 for detecting the rotational position (rotation angle) of the horizontal arm 124, and fourth position encoder 326 for detectingrotationalposition (rotation angle) of the vertical arm 126.

Three-dimensional present position data is supplied to the assist-parameter-table generating portion 364 and transportation area setting portion 367. Moreover, the present position data is supplied to the teaching apparatus 300 from the assist-parameter-table generating portion 364 through the teaching-apparatus I/F portion 361. The teaching apparatus 300 can display the present position data on the screen of an image display unit. Moreover, the teaching apparatus 300 can set the present position data as a teaching-point position.

The teaching apparatus 300 can supply a previously-generated teaching job program to the transportation and assist control portion 363 through the teaching-apparatus I/F portion 361.

The assist-parameter-table generating portion 364 has a nonvolatile memory for storing the teaching job program. The assist-parameter-table generating portion 364 writes the teaching job program supplied from the teaching apparatus 300 in the nonvolatile memory. The assist-parameter-table generatingportion 364 updates the teaching job program stored in the nonvolatile memory whenever the teaching job program is supplied from the teaching apparatus 300. When power is supplied to the controller 360, the assist-parameter-table generating portion 364 reads the teaching job program from the nonvolatile memory and generates the assist parameter table 365.

The width W and height H of an assist area, spring coefficient AK and friction coefficient AD of an invisible wall (virtual wall), virtual mass M, virtual friction coefficient D, reaction force coefficient HK, and reaction force friction coefficient HD are set by a teaching job program for each teaching point and whether to perform automatic movement up to the next teaching point or switch to assist transportation is set. When automatic movement up to the next teaching point is performed, movement speed is set. Moreover, an audio output of an operation guidance for a worker is set according to necessity.

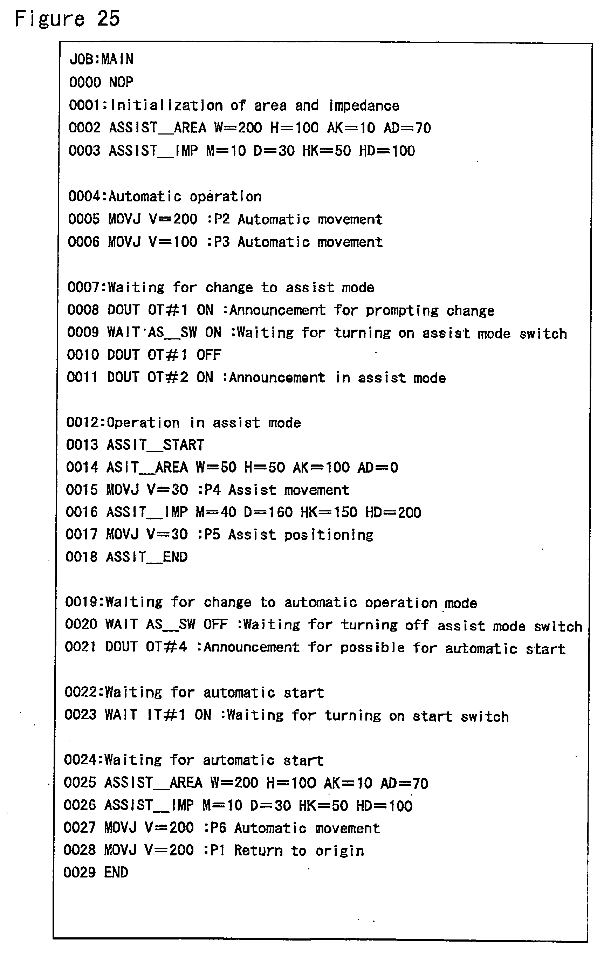

Figure 25 is an illustration showing a teaching jobprogram. Line number 0002 shows an example of setting the width W of an assist area to 200 mm, the height H of the assist area to 100 mm, spring coefficient AK of an invisible wall to 10, and friction coefficient AD of the invisible wall to 70 by assist area setting commands. Line number 0003 shows an example of setting virtual mass M to 10, virtual friction coefficient D to 30, reaction force coefficient HK to 50, reaction force friction coefficient HD to 100 by impedance setting commands. Numerical values set by the assist area setting commands and assist impedance setting commands are effective until numerical values are set by the next assist area setting command and assist impedance setting commands. Line number 0005 shows a setting example for performing automatic movement up to the next teaching point P2 at a speed V=200 (mm/sec). Line number 0008 shows an example of outputting an audio message for prompting switching to the assistmode. Line number 0015 shows an example of setting the assist moving speed V up to the next teaching point P4 to 30 (mm/sec).

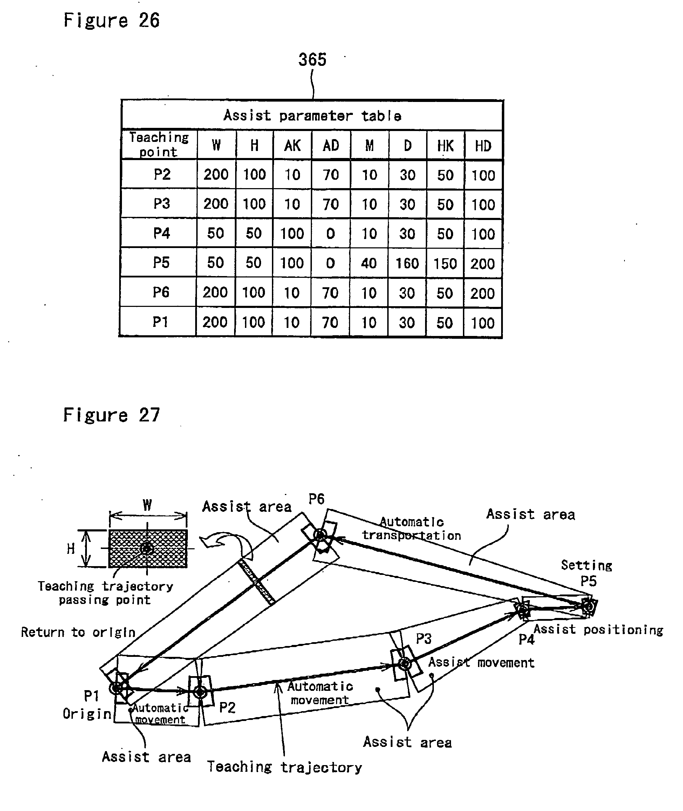

Figure 26 is an illustration showing an assist parameter table. The assist-parameter-table-generating portion 364 generates the assist parameter table 365 for relating teaching points to various parameters as shown in Figure 26 by deciphering a teaching job program shown in Figure 25. The assist parameter table 365 is stored in a volatile memory such as a RAM. Thereby, the transportation area setting portion 367 can read an assist parameter at a high speed.

Figure 27 is an illustration showing an assist area setting method. The transportation area setting portion 367 sets an assist area in accordance with the assist parameter table 365. The transportation area setting portion 367 sets a spatial area having a width W and a height H on a plane orthogonal to a transportation route along a transportation route (teaching trajectory) for connecting teaching points P1 to P6 as an assist area. The assist area is set so that its center becomes the transportation route (teaching trajectory) . When the width W and height H differ between teaching points, the width W and height H are set so that they are slowly changed along the transportation route. Figure 27 shows a transportation route of the door-glass-elevating regulator R. In this case, the teaching point P1 corresponds to the component supply position A and the teaching point P5 corresponds to the setting position B.

The transportation area setting portion 367 determines to which assist area the present position (position of component to be transported) of the holding means 106 supplied from the position computing portion 366 corresponds, computes the return force of an invisible wall, and switches assist impedances. When the holding means 106 is moved in a direction separate from the assist area, a return force according to the invisible-wall spring coefficient is output from the transportation area setting portion 367.

Because the motor driving control portion 369 drives the motors 313, 317, 323, and 325 so that the return force acts, the holding means 106 (transportation component) is not out of the assist area. In other words, it is possible to move the holding means 106 only in a tunnel-like transportation area comparted by the invisible wall in either case of automatic movement and assist movement. Moreover, in the case of this embodiment, an example of forming a rectangular assist area is shown. However, it is possible to properly set the shape of the assist area in accordance with the shape of a component to be transported or work conformation.

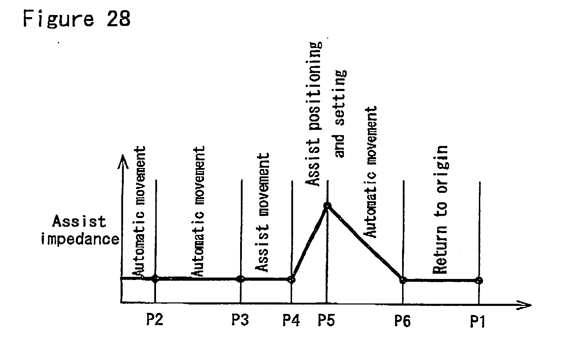

Figure 28 is an illustration showing the switching characteristic of an assist impedance. In the initial stages of automatic movement and assist movement, the virtual mass M and virtual friction coefficient D are set to small values so that a characteristic suited to transport a component at a high speed is obtained. Moreover, the virtual mass M and virtual friction coefficient D are maximized for setting so that a characteristic suited to finely move components is obtained and setting feedback can be securely obtained by increasing the reaction force coefficient HK and reaction-force friction coefficient HD.

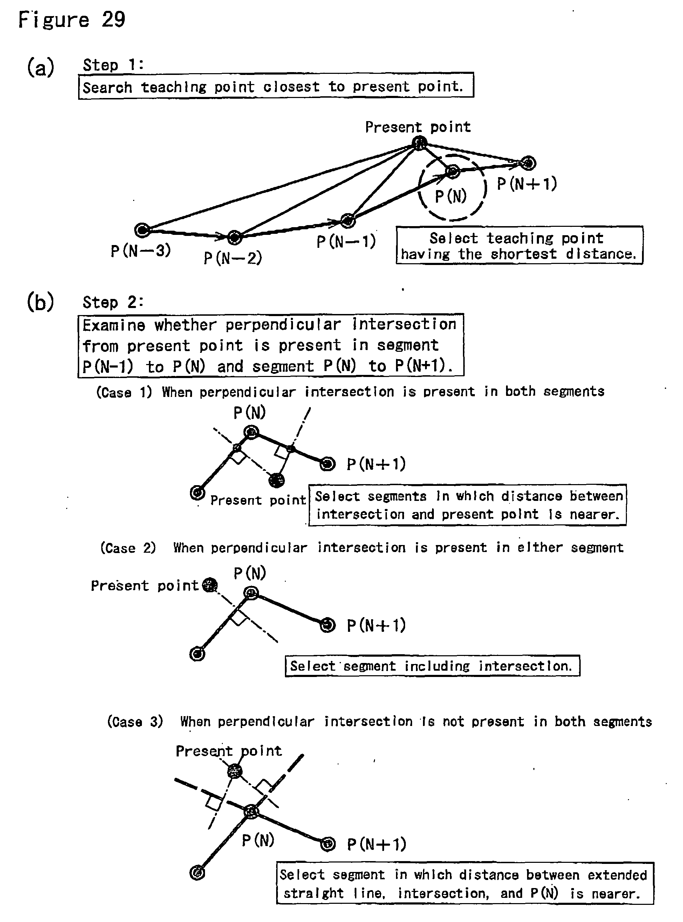

Figures 29(a) and 29(b) are illustrations of processing for relating the present position with an assist area. As shown in Figure 29(a), the transportation area setting portion 367 searches a teaching point closest to the present point (present position). In this case, P(N) is selected as a shortest-distance teaching point. Then, the transportation area setting portion 367 examines whether an intersection of a perpendicular from the present point is present in segments for two segments P(N-1) to P(N) and P(N) to P(N+1) contacting with the shortest teaching point P(N). As shown by (case 1) in Figure 29(b), when the intersection of the perpendicular is present in both segments, a segment in which the distance between the intersection and the present point is smaller is selected. As shown by (case 2), when the intersection of the perpendicular is not present in both segments, a segment in which the intersection is present is selected. As shown by (case 3), when the intersection is not present inboth segments, a segment in which the distance from the intersection with a straight line obtained by extending the segment up to P (N) is smaller is selected.

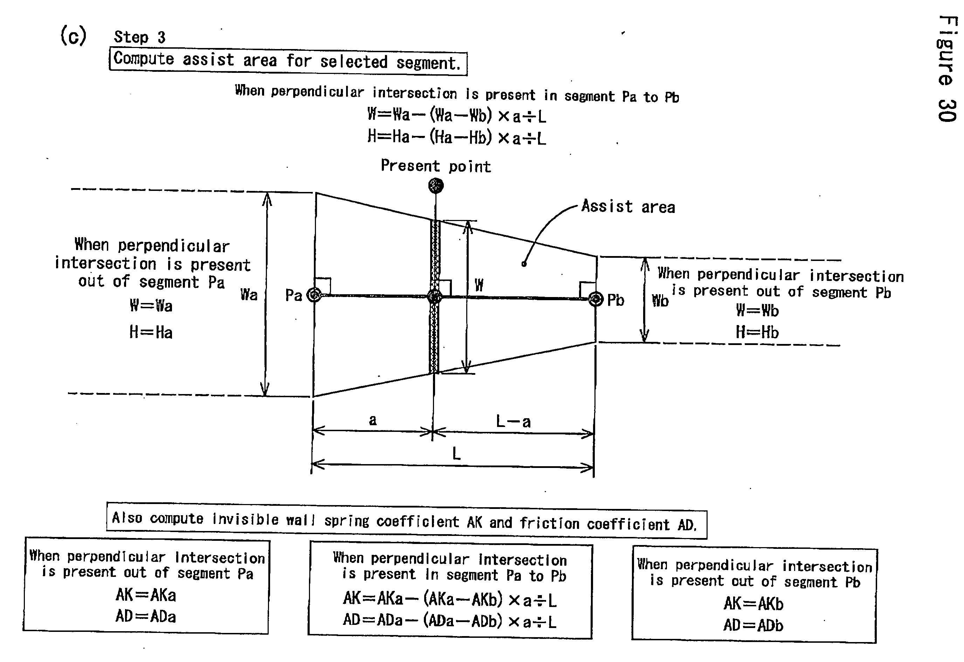

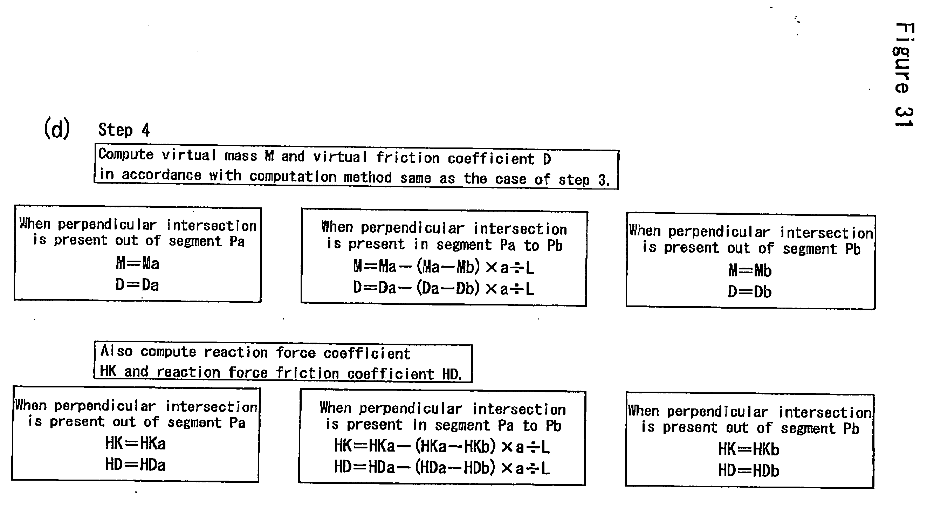

Figures 30 and 31 are illustrations of processing for computing an assist area and assist impedance when the assist area and assist impedance are changed between teaching points. When the transportation area setting portion 367 selects a segment, it computes an assist area at the present position for the selected segment (transportation route). As shown in Figure 30, the segment Pa to Pb is selected. When the range of the assist area is different in one teaching point Pa and the other teaching point Pb, the range of the assist area is changed every transportation position (present point). Therefore, it is necessary to sequentially set an assist area every present point. In Figure 30, the width of the assist area is set Wa and height H of it is set to Ha at one teaching point Pa and the width of the assist area is set to Wb and the height of it is set to Hb at the other teaching point Pb. The distance between teaching points is L. Therefore, when the perpendicular intersection is present in Pa to Pb and the distance from the teaching point Pa up to the perpendicular intersection of the present point is assumed as a, the width W of the assist area at that position is obtained in accordance with the following expression (6).

Moreover, the height H of the assist area is obtained in accordance with the following expression (7).

$$W = Wa-(Wa-Wb) \times a \div L \quad \ldots \ldots \quad (6)$$

$$H = Ha-(Ha-Hb) \times a \div L \quad \ldots \ldots \quad (7)$$

When the perpendicular intersection is present at the outside of the teaching point Pa, W is set to Wa and H is set to Ha. When the perpendicular intersection is present at the outside of the teaching point Pb, W is set to Wb and H is set to Hb.

The transportation area setting portion 367 similarly perform computation for the invisible-wall spring coefficient AK and invisible-wall friction coefficient AD. Specifically, when the spring coefficient of the teaching point Pa is set to AKa and the friction coefficient of it is set to ADa and the spring coefficient of the teaching point Pb is set to AKb and the friction coefficient of it is set to ADb, the spring coefficient AK at the position of the distance a is obtained in accordance with the following expression (8) and the friction coefficient AD is obtained in accordance with the following expression (9).

$$AK = AKa-(AKa-AKb) \times a \div L \quad \ldots \ldots \quad (8)$$

$$AD = ADa-(ADa-ADb) \times a \div L \quad \ldots \ldots \quad (9)$$

As shown in Figure 31, the virtual mass M and virtual friction coefficient D at the present point is computed and the reaction-force coefficient HK and reaction-force friction coefficient HD are computed in accordance with the same computation method.

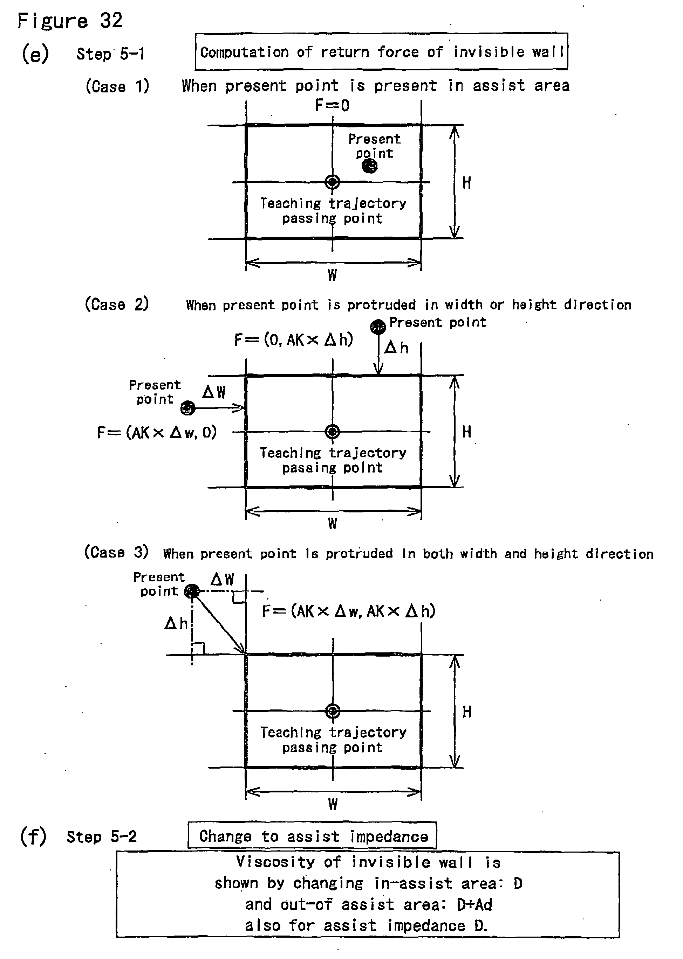

Figures 32(e) and 32(f) are illustrations of computing of return force of an invisible wall and switching of an assist impedance. When the transportation area setting portion 367 sets an assist area and assist impedance for the present point, it computes the return force of an invisible wall and switches an assist impedance in accordance with the positional relation between the present point and the assist area. As shown by the case 1, when the present point is present in the assist area, the return force F is zero. As shown by the case 2, when the present point is protruded in the width or height direction, a return force corresponding to the protrusion value is computed. As shown by the case 3, when the present point is protruded in both width and height direction, a return force in which a width-directional return force and height-directional return force are synthesized is computed. Moreover, by switching an assist impedance to a value (D+AD) obtained by adding invisible-wall friction coefficient AD to the virtual friction coefficient D at the outside of the assist area, the viscosity of the invisible wall is shown.

The motor driving control portion 369 shown in Figure 24 drives the motors 313, 317, 323, and 325 so as to return the present point (position of holding means 106, that is, transportation position of transportation component) in an assist area in accordance with the return force computed by the transportation area setting portion 367. Thereby, when the position of the holding means 106 is present out of the transportation area in an initial state when supplying power to the transportation means 104, it is possible to automatically return the holding means 106 to a predetermined position in the transportation area. Moreover, after returning the position of the holding means 106 into the transportation area, it is possible to move the holding means 106 through a transportation route in the automatic transportation mode or assist transportation mode.

In Figure 24, reference numeral 370 denotes a mode change switch for changing the automatic transportation mode and assist transportation mode. Reference numeral 371 denotes a deadman switch. The deadman switch 371 is a three-position switch which becomes a turned-on (close) state while operating a switch lever by a preferable force and becomes a turned-off (open) state in anon-operation state or when strongly gripping the switch lever. The motor driving control portion 369 stops supply of power to the motors 313, 317, 323, and 325 and stops supply of a work assist force (assist force) even if the mode change switch 370 is set to the assist transportation mode side when the deadman switch 371 is the turned-off (open) state.

The deadman switch 371 is set to the gripping portion (assist grip) of the operation lever set to the machine pedestal table 131 of the holding means 106. An operating force/torque sensor 372 for detecting the operation force and operation direction by a worker is set to the operation lever. The operating force/toque sensor 372 can use at least a sensor capable of detecting operation forces in three-axis directions. Specifically, by using at least three pressure sensors and three load cells, the operation force in each direction is detected. The motor driving control portion 369 controls work assist forces (assist forces) supplied from the motors 313, 317, 323, and 325 correspondingly to each-directional operation force in the assist transportation mode.

A transportation component is set to the vertical arm 126 in a floating state through a floating mechanism. When the transportation component or the holding mechanism portion 132 contacts with a setting portion, a displacement occurs in the floating state and the displacement is detected by a displacement sensor 306. The motor driving control portion 369 computes a setting feedback force in accordance with the displacement direction, displacement value, reaction force coefficient HK, and reaction force friction coefficient HD detected by the displacement sensor 306 to reduce work assist forces (assist forces) supplied from the motors 313, 317 323, and 325. Thereby, the worker can feel the setting feedback force through the operation lever.

Brake mechanisms 313A, 317A, 323A, and 325A are set to output shaft sides of the motors 313, 317, 323, and 325. These brake mechanisms 313A, 317A, 323A, and 325A are respectively constituted so as to mechanically stop the rotation of each motor. The brake mechanisms 313A, 317A, 323A, and 325A are respectively constituted so as to cancel a brake state when power is supplied to, for example, a solenoid.

The motor driving control portion 369 controls the brake mechanisms 313A, 317A, 323A, and 325A to a brake cancel state before operating the motors 313, 317, 323, and 325. The motor driving control portion 369 controls thebrakemechanisms 313A, 317A, 323A, and 325A to a brake state after a preset delay time elapses from the point of time when stopping operations of the motors 313, 317, 323, and 325. However, in the case of a configuration capable of detecting rotations of the motors 313, 317, 323, and 325, it is allowed to control the brake mechanisms 313A, 317A, 323A, and 325A to a brake state at the point of time when rotations of the motors are stopped. Thus, it is possible to eliminate an impact when stopping component transportation.

The state display portion 368 includes various types of display units for respectively displaying an operation state and alarm of the transportation means 104 and a voice synthesizer for generating a voice message such as operation guide for a worker.

The setting control portion 362 controls various operations of theholdingmeans 106. When an attraction switch 381 is operated, the setting control portion 362 drives an attraction pump 388 to make an attraction pad 341 attract a transportation component. When an advance switch 382 or retreat switch 383 is operated, the setting control portion 362 drives a first cylinder 335 to advance or retreat the substrate 336 of a fastening mechanism 334. When a clockwise-rotation switch 384 or counter clockwise-rotation switch 385 is operated, the setting control portion 362 drives a motor 337 to return the attitude of a transportation component to a tilted state or the original state. When a setting start switch 386 is operated, the setting control portion 362 drives a second cylinder 351 and drives a nut runner 348 through a nut runner driving portion 389 to make the nut runner 348 fasten a bolt. When a setting completion switch 387 is operated, the setting control portion 362 completes bolt fastening work and notifies the transportation and assist control portion 363 that setting is completed.

Then, a specific example of the operation for supplying a component in the automatic transportation mode, setting the component in the assist transportation mode, and returning to a component receiving position (origin) in the automatic transportationmode is described. In this case, it is assumed that the mode change switch 370 is set to the automatic transportation mode side and the holding means 106 returns to the component receiving position (origin). When the transportation and assist control portion 363 detects that a not-illustrated component receiving completion switch is operated, it automatically transports the holding means 106 up to the teaching point P3 through the teaching point P2 and then stops transportation. The transportation and assist control portion 363 generates a voice message for prompting change to the assist transportation mode. When the mode change switch 370 is changed to the assist transportation mode side and the deadman switch 371 is turned on, the transportation and assist control portion 363 power-assists the movement of the holding means 106 in accordance with an output of the operating force/torque sensor 372. Thereby, assist movement and assist positioning are made and components are set.

When the transportation and assist control portion 363 receives from the setting control portion 362 a notice showing that setting is completed, it generates a voice message for prompting change to the automatic operation mode. When the mode change switch 370 is changed to the automatic transportation mode side, the deadman switch 371 is turned off, and a not-illustrated automatic operation start switch is operated, the transportation and assist control portion 363 starts automatic movement of the holding means 106. Thereby, the holding means 106 is moved to the component receiving position (origin) P1 through the teaching point P6.

In the case of this embodiment, an assist area is also set to an automatic moving route. Therefore, even if assist transportation is performed instead of automatic transportation, it is possible to transport a component along a transportation route. Because an assist area is narrower as approaching a component setting position, it is possible to assist-move the component up to the vicinity of the setting position. Moreover, because an assist impedance is increased as approaching the component setting position, a worker can accurately perform positioning and setting work.

Moreover, in the case of this embodiment, even if the position of the holding means 106 is deviated from an automatic moving route, it is possible to automatically return the holding means 106 into an automatic transportation route or transportation area (assist area).

Industrial Applicability

According to the present invention, even if a product contacts with any obstacle or component to be set when a worker sets a product to a transportation component or component to be set, the worker can efficiently perform the transportation work without being aware of the obstacle or applying an impact to the product.

Moreover, the worker can efficiently perform the transportation work without being aware of an obstacle or applying an impact to the product.

Therefore, by applying the present invention to the setting work of an automatic production line which can be hardly fully automated, it is possible to improve a work environment and cost performance.

**Claims**

1. An assist transportation method for reducing a load applied to a work when the worker operates transportation means to transport a product, **characterized by** floating the product from the transportation means when the product contacts with an obstacle to moderate the impact, detecting the displacement value of the product due to floating, computing the displacement value to compute the reaction force due to the impact, and communicating the reaction force to the worker who operates the transportation means.

2. An assist transportation device for reducing a load applied to a worker when the worker operates transportation means to transport a product, comprising holding means for holding the product, a floating mechanism set to the connection portion between the holding means and the transportation means, displacement detection means for detecting the displacement value of the floating mechanism, and control means for computing the displacement vale detected by the displacement detection means and computing a reaction force, **characterized by** communicating the reaction force to the worker who operates the transportation means.

3. An assist transportation method for reducing a load applied to a worker when the worker operates transportation means to transport a product, **characterized by** setting a work area in which the product can freely move and setting a limit area formed adjacently to the work area to generate a predetermined reaction force so as to return the product to the work area when the product comes in.

4. An assist transportation device for reducing a load applied to a worker when the worker operates transportation means to transport a product, comprising a work area in which the product can freely move, and a limit area formed adj acently to the work area to generate a predetermined reaction force so as to return the product to the work area when the product comes in, and control means for computing the entering value of the product entering the limit area and the reaction force.

5. An assist transportation method for reducing a load applied to a worker when the worker operates transportation means to transport a product, **characterized by** floating the product from the transportation means, detecting the displacement value of the product due to the floating when the worker holds the product and operates the product in a direction for transporting the product, and computing the displacement value to assist-transport the product as the target value of the transportation means.

6. An assist transportation device for reducing a load applied to a worker when the worker operates transportation means and transport a product, comprising holding means for holding the product, an operation handle set to the holding means for the worker to lead the product in a desired direction, a floating mechanism set to the connection portion between the holding means and the transportation means, displacement detection means for detecting the displacement value of the floating mechanism, and control means for computing the displacement value detected by the displacement detection means and assist-transporting the product as the target value of the transportation means.

7. An assist transportation method for reducing a load applied to a worker for operating an operation handle set to transportation means and transporting a product, **characterized by** detecting the direction and magnitude of an operation force applied to the operation handle when the worker operates the product in a direction for transporting the product, detecting the direction and magnitude of an external force when the product contacts with an obstacle, computing the direction and magnitude of the external force, assist-transporting the product as the target value of the transportation means, and communicating a reaction force due to the external force to the worker.

8. An assist transportation device for reducing a load applied to a worker for operating an operation handle set to transportation means and transporting a product, comprising holding means for holding the product, operation force detection means for detecting the direction and magnitude of an operation force applied to the operation handle set to the connection portion between the holding means and the transportation means, external force detection means set to the connection portion between the holding means and the transportation means to detect the direction and magnitude of an external force applied to the holding means, and control means for computing the direction and magnitude of the operation force detectedby the operation force detection means and the direction and magnitude of the external force detected by the external force detection means and assist-transporting the product as the target value of the transportation means, **characterized by** communicating a reaction force due to the external force to the worker.

9. An assist transportation method for reducing a load applied to a worker for operating transportation means and transporting a product, **characterized by** detecting the direction and magnitude of an operation force when the worker grips the product and moves the transportation means in a direction for transporting the product, computing the direction and magnitude of the operation force, and assist-transporting the product as the target value of the transportation means.

10. An assist transportation device for reducing a load applied to a worker for operating transportation means and transporting a product, comprising holding means for holding the product, an operation handle set to the holding means for the worker to lead the product in a desired direction, external force detection means set to the connection portion between the holding means and the transportation means to detect the direction and magnitude of an external force applied to the holding means, and control means for computing the direction and magnitude of the external force detected by the external force detection means and assist-transporting the product as the target value of the transportation means.

11. An assist transportation method for reducing a load applied to a worker when the worker operates transportation means to transport a product, comprising a condition setting step of setting a transportation area and an assist condition every predetermined position of a transportation route and a transportation area setting step of setting a transportation area and assist condition between predetermined positions adjacent to each other in accordance with a transportation area and assist condition every predetermined position set in the condition setting step, **characterized by** setting the transportation area of a component.

12. An assist transportation method for reducing a load applied to a worker when the worker operates transportation means to transport a product, comprising a transportation area recognizing step of recognizing a transportation route and a transportation area in accordance with the position data for a plurality of teaching points and transportation area data set for each teaching point and a transportation portion position moving step of obtaining a transportation route closest to the position of a transportation portion when the position of the transportation portion is out of a transportation area and moving the transportationportion into a predetermined position of the obtained transportation route or the transportation area of the obtainedtransportation route, **characterized by** returning the transportation portion into the transportation area when the position of the transportation portion for supporting the product is deviated from the transportation area.

Figure 1

Figure 2

(a)

(b)

Figure 3

Figure 4

Wa

27, P

27, P

30

Spring

Displacement sensor

Spring

Displacement sensor

Operation force

Assist force

Assist force

28

28

Reaction force felt by worker

Reaction force felt by worker

X

Z

Y

Figure 5

Y

Limit area

Limit area

La

Lb

$-Xd$

$Xd$

X

We    Work area

Figure 6

Figure 7

Figure 8

**Figure 9**

```
┌──────────────┐           ┌──────────┐          ┌──────────┐        ┌──────────────┐
│  ⌐61         │Displacement│  ⌐65     │Target    │  ⌐66     │        │  ⌐12, 19, 23 │
│ Displacement │  value    │  Target   │ value    │ Control  │        │   Assist     │
│   sensor     │──────────▶│   value   │─────────▶│ portion  │───────▶│  actuator    │
│              │           │ computing │          │          │        │              │
└──────────────┘           │  portion  │          └──────────┘        └──────────────┘
                           └──────────┘
```

Angle and angular speed of each axis

**⌐64 Position and speed detection means**

**Figure 10**

Wa

Vehicle body    Workpiece reaction force

27, P

Instrument panel holding means + Instrument panel

Operation force

28a, 28b Operation handle

30

Spring

61 Displacement sensor

Assist force

Front end shaft of assist transportation device

X Z Y

Figure 11

Figure 12

Figure 13

## Figure 14

## Figure 15

Figure 16

Figure 17

Figure 18

Figure 19

(a)

(b)

Figure 20

(a)

(b)

Figure21

## Figure 22

```
        /161                    /262                    /263           113, 117, 123,
  ┌──────────────┐  External  ┌──────────┐           ┌──────────────┐  /125, 127, 128
  │ Interference │  force     │Target value│ Target value│Control portion│ ┌──────────────┐
  │detection force├──────────►│ computing  ├──────────►│              ├►│    Assist     ├──►●──►
  │/torque sensor │ Operation  │  portion   │           └──────────────┘ │   actuator    │
  │  (six axes)   │ force      └──────────┘                  ▲           └──────────────┘
  └──────────────┘                  ▲                        │                            │
         ▲                          │                        │              /164          │
         │                          │              ┌─────────┴────────────────────────┐   │
         │                          │              │    Position and speed            │◄──┘
         └──────────────────────────┘              │     detection means              │
                                     Angle and angular└───────────────────────────────┘
                                     speed of each axis
```

## Figure 23

```
                              /W
        ┌──────────────────────────────────────────────────────┐
        │      Door              Workpiece reaction force       │
        └──────────────────────────────────────────────────────┘
                                              ⇩
                        /106, R                                  /106, R
  ┌──────────────┐                    ┌──────────────┐      ⇧ Operation force
  │Holding means │  ⇧ Operation force │Holding means │
  │     +.       │    /229            │     +        │      ── 229 Operation handle
  │  Regulator   │    Operation handle│  Regulator   │
  └──────────────┘                    └──────────────┘          /130 Box
  │Interference detection│ /130 Box   │Interference detection│
  │force/torque sensor   │            │force/torque sensor   │  /161
  │   (Six axes)         │ /161       │   (Six axes)         │
  ┌──────────────┐              Assist force ┌──────────────┐
  │Front end shaft of│              ⇩         │Front end shaft of│
  │    assist        │                        │    assist        │
  │ transportation   │                        │ transportation   │
  └──────────────┘                            └──────────────┘
   ⇧
  Assist force

        X
        ↑   Z
        │  ↗
        └──────► Y
```

Figure 24

# Figure 25

```
JOB:MAIN
0000 NOP
0001:Initialization of area and impedance
0002 ASSIST__AREA W=200 H=100 AK=10 AD=70
0003 ASSIST__IMP M=10 D=30 HK=50 HD=100

0004:Automatic operation
0005 MOVJ V=200 :P2 Automatic movement
0006 MOVJ V=100 :P3 Automatic movement

0007:Waiting for change to assist mode
0008 DOUT OT#1 ON :Announcement for prompting change
0009 WAIT·AS__SW ON :Waiting for turning on assist mode switch
0010 DOUT OT#1 OFF
0011 DOUT OT#2 ON :Announcement in assist mode

0012:Operation in assist mode
0013 ASSIT__START
0014 ASIT__AREA W=50 H=50 AK=100 AD=0
0015 MOVJ V=30 :P4 Assist movement
0016 ASSIT__IMP M=40 D=160 HK=150 HD=200
0017 MOVJ V=30 :P5 Assist positioning
0018 ASSIT__END

0019:Waiting for change to automatic operation mode
0020 WAIT AS__SW OFF :Waiting for turning off assist mode switch
0021 DOUT OT#4 :Announcement for possible for automatic start

0022:Waiting for automatic start
0023 WAIT IT#1 ON :Waiting for turning on start switch

0024:Waiting for automatic start
0025 ASSIST__AREA W=200 H=100 AK=10 AD=70
0026 ASSIST__IMP M=10 D=30 HK=50 HD=100
0027 MOVJ V=200 :P6 Automatic movement
0028 MOVJ V=200 :P1 Return to origin
0029 END
```

## Figure 26

365

| Assist parameter table | | | | | | | | |
|---|---|---|---|---|---|---|---|---|
| Teaching point | W | H | AK | AD | M | D | HK | HD |
| P2 | 200 | 100 | 10 | 70 | 10 | 30 | 50 | 100 |
| P3 | 200 | 100 | 10 | 70 | 10 | 30 | 50 | 100 |
| P4 | 50 | 50 | 100 | 0 | 10 | 30 | 50 | 100 |
| P5 | 50 | 50 | 100 | 0 | 40 | 160 | 150 | 200 |
| P6 | 200 | 100 | 10 | 70 | 10 | 30 | 50 | 200 |
| P1 | 200 | 100 | 10 | 70 | 10 | 30 | 50 | 100 |

## Figure 27

Figure 28

# Figure 29

(a)  Step 1:

Search teaching point closest to present point.

Present point

P(N+1)

P(N)

P(N-3)   P(N-2)   P(N-1)

Select teaching point
having the shortest distance.

(b)  Step 2:

Examine whether perpendicular intersection
from present point is present in segment
P(N-1) to P(N) and segment P(N) to P(N+1).

(Case 1) When perpendicular intersection is present in both segments

P(N)

P(N+1)

Present point

Select segments in which distance between
intersection and present point is nearer.

(Case 2)  When perpendicular intersection is present in either segment

Present point

P(N)

P(N+1)

Select segment including intersection.

(Case 3)  When perpendicular intersection is not present in both segments

Present point

P(N)   P(N+1)

Select segment in which distance between extended
straight line, intersection, and P(N) is nearer.

Figure 30

(c) Step 3

Compute assist area for selected segment.

When perpendicular intersection is present in segment Pa to Pb

$$W=Wa-(Wa-Wb)\times a\div L$$
$$H=Ha-(Ha-Hb)\times a\div L$$

Present point

Assist area

When perpendicular
intersection is present
out of segment Pa

$$W=Wa$$
$$H=Ha$$

Wa   Pa

W

Pb   Wb

When perpendicular intersection
is present out of segment Pb

$$W=Wb$$
$$H=Hb$$

a          L−a

L

Also compute invisible wall spring coefficient AK and friction coefficient AD.

| When perpendicular intersection is present out of segment Pa | When perpendicular intersection is present in segment Pa to Pb | When perpendicular intersection is present out of segment Pb |
|---|---|---|
| $AK=AKa$ $AD=ADa$ | $AK=AKa-(AKa-AKb)\times a\div L$ $AD=ADa-(ADa-ADb)\times a\div L$ | $AK=AKb$ $AD=ADb$ |

EP 1 642 693 A1

Figure 31

EP 1 642 693 A1

(d)    Step 4

Compute virtual mass M and virtual friction coefficient D
in accordance with computation method same as the case of step 3.

| When perpendicular intersection is present out of segment Pa | When perpendicular intersection is present in segment Pa to Pb | When perpendicular intersection is present out of segment Pb |
|---|---|---|
| $M=Ma$ $D=Da$ | $M=Ma-(Ma-Mb)\times a\div L$ $D=Da-(Da-Db)\times a\div L$ | $M=Mb$ $D=Db$ |

Also compute reaction force coefficient
HK and reaction force friction coefficient HD.

| When perpendicular intersection is present out of segment Pa | When perpendicular intersection is present in segment Pa to Pb | When perpendicular intersection is present out of segment Pb |
|---|---|---|
| $HK=HKa$ $HD=HDa$ | $HK=HKa-(HKa-HKb)\times a\div L$ $HD=HDa-(HDa-HDb)\times a\div L$ | $HK=HKb$ $HD=HDb$ |

# Figure 32

(e) Step 5-1 | Computation of return force of invisible wall |

(Case 1) When present point is present in assist area

$F = 0$

Present point

Teaching trajectory passing point

H

W

(Case 2) When present point is protruded in width or height direction

Present point

$F = (0, AK \times \Delta h)$

$\Delta h$

Present point $\Delta W$

$F = (AK \times \Delta w, 0)$

Teaching trajectory passing point

H

W

(Case 3) When present point is protruded in both width and height direction

Present point $\Delta W$

$F = (AK \times \Delta w, AK \times \Delta h)$

$\Delta h$

Teaching trajectory passing point

H

W

(f) Step 5-2 | Change to assist impedance |

Viscosity of invisible wall is
shown by changing in-assist area: D
and out-of assist area: D+Ad
also for assist impedance D.

# EP 1 642 693 A1

<table>
<tr><td align="center">INTERNATIONAL SEARCH REPORT</td><td>International application No.<br>PCT/JP2004/007457</td></tr>
</table>

**A. CLASSIFICATION OF SUBJECT MATTER**
Int.Cl⁷ B25J13/08

According to International Patent Classification (IPC) or to both national classification and IPC

**B. FIELDS SEARCHED**

Minimum documentation searched (classification system followed by classification symbols)
Int.Cl⁷ B25J13/08, B25J17/02, B23P21/00, B65D65/00, B66F19/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 4-354685 A  (Takenaka Corp.),<br>09 December, 1992 (09.12.92),<br>Full text; all drawings<br>(Family: none) | 9,10<br>1-8,11,12 |
| Y | JP 5-253883 A  (Fujitsu Ltd.),<br>05 October, 1993 (05.10.93),<br>Par. Nos. [0004] to [0024]<br>(Family: none) | 1,2,5,6 |
| Y | JP 8-234842 A  (Matsushita Electric Works, Ltd.),<br>13 September, 1996 (13.09.96),<br>Par. Nos. [0052] to [0057], [0064]<br>(Family: none) | 3,4 |

☒ Further documents are listed in the continuation of Box C.     ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>27 August, 2004 (27.08.04) | Date of mailing of the international search report<br>14 September, 2004 (14.09.04) |
| Name and mailing address of the ISA/<br>Japanese Patent Office | Authorized officer |
| Facsimile No. | Telephone No. |

Form PCT/ISA/210 (second sheet) (January 2004)

45

**INTERNATIONAL SEARCH REPORT**

| International application No. |
|---|
| PCT/JP2004/007457 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 7-236944 A  (Ishikawajima-shibaura Machinery Co., Ltd.), 12 September, 1995 (12.09.95), Full text; all drawings (Family: none) | 5,6 |
| Y | JP 4-13580 A (Sumitomo Heavy Industries, Ltd.), 17 January, 1992 (17.01.92), Page 2, lower left column to page 3, upper left column; Fig. 1 (Family: none) | 7,8 |
| Y | JP 10-187221 A  (Nissan Motor Co., Ltd.), 14 July, 1998 (14.07.98), Par. Nos. [0043] to [0083]; Figs. 4, 10 & US 5956465 A | 11,12 |
| A | JP 4-300186 A  (Sumitomo Rubber Industries, Ltd.), 23 October, 1992 (23.10.92), Full text; all drawings (Family: none) | 1-12 |
| A | JP 7-61799 A  (Honda Motor Co., Ltd.), 07 March, 1995 (07.03.95), Full text; all drawings (Family: none) | 1-12 |

Form PCT/ISA/210 (continuation of second sheet) (January 2004)